# EUROPÄISCHE PATENTSCHRIFT

(11) **EP 3 898 435 B1**
(45) Veröffentlichungstag und Bekanntmachung des Hinweises auf die Patenterteilung: **30.10.2024**
(21) Anmeldenummer: 19817358.5
(22) Anmeldetag: 16.12.2019
(51) Int. Cl.: B65D 17/50, B65D 47/28

(54) **DOSENDECKEL UND DOSE**
CAN LID AND CAN
COUVERCLE DE CANETTE ET CANETTE

(30) Priorität: 17.12.2018 EP 18212937
(43) Veröffentlichungstag der Anmeldung: 27.10.2021
(73) Patentinhaber: RE-LID Engineering AG, 9491 Ruggell (LI)
(72) Erfinder: SCHANDL, Christian, 2700 Wiener-Neustadt (AT); BÜHLER, Alois, 9195 Triesen (LI)
(74) Vertreter: Vossius & Partner Patentanwälte Rechtsanwälte mbB
(86) Internationale Anmeldenummer: PCT/EP2019/085240
(87) Internationale Veröffentlichungsnummer: WO 2020/126969

(56) Entgegenhaltungen:
- EP-A1- 2 614 010
- EP-A1- 2 614 010
- EP-A1- 2 848 547
- EP-A1- 2 848 547
- WO-A1-2009/062004
- WO-A1-2009/062004
- WO-A1-2015/185718
- WO-A1-2015/185718

## Beschreibung

Die vorliegende Erfindung betrifft einen Dosendeckel. Zudem betrifft die Erfindung eine Dose.

Bekannt sind Getränkedosen mit einem zylindrischen Behälter aus Aluminium oder Weißblech. Darauf ist ein Deckel aufgefalzt, an welchem eine Metalllasche als Öffner angenietet ist. Beim Anheben der Metalllasche wird eine angeritzte ovale Linie aufgebrochen und ein Teil des Deckels ins Doseninnere zum Freigeben einer Trinköffnung gedrückt. Nachteilig ist dabei, dass die Getränkedose nicht wieder verschlossen werden kann. Dadurch wird ein darin befindliches Getränk schnell schal. Zudem kann bei einem weiteren Transport leicht das Getränk verschüttet werden.

Es sind auch wiederverschließbare Dosendeckel bekannt. Beispielsweise wird in der EP 2 614 010 B1 ein Dosendeckel beschrieben, bei welchem ein unterseitiges Verschlusselement durch ein oberseitiges Betätigungselement zwischen einer Schließstellung und einer Offenstellung geschwenkt werden kann. Das Verschlusselement und das Betätigungselement sind jedoch große Bauteile, was bei der Abfüllung nachteilig ist. Zudem ist der Dosendeckel so schwer und teuer. Die rotatorische Bewegung erfordert zudem hohe Betätigungskräfte und belastet die Bauteile ungünstig, beispielsweise mit einer starken Scherkraft.

Aufgabe der vorliegenden Erfindung ist es, einen Dosendeckel, welcher wiederverschließbar ist, zu verbessern.

Diese Aufgabe wird durch den Gegenstand des unabhängigen Patentanspruchs gelöst.

Vorteilhafte Ausgestaltungen mit zweckmäßigen Weiterbildungen der Erfindung sind in den jeweiligen Unteransprüchen angegeben.

Ein erster Aspekt betrifft einen Dosendeckel für eine Dose gemäß Anspruch 1. Die Dose kann vorzugsweise als Getränkedose und/oder als Aufbewahrungsbehälter für Schüttgut ausgebildet sein. Der Dosendeckel weist wenigstens einen Deckelspiegel auf, welcher dazu ausgebildet ist, eine Oberseite der Dose zu begrenzen, vorzugsweise durch Bördeln eines äußeren umlaufenden Rands des Deckelspiegels mit einer seitlichen Wand der Dose. Bezüglich Material und Aufbau kann der Deckelspiegel beispielsweise einem Deckel von herkömmlichen Getränkedosen entsprechen. Beispielsweise kann der Deckelspiegel aus Aluminium oder Weißbleich gebildet sein, optional mit einer Kunststoffbeschichtung, beispielsweise als Korrosionsschutz. Der Deckelspiegel weist wenigstens eine Ausgussöffnung auf, durch welche ein in der Dose befindlicher Stoff ausgeschüttet werden kann. Die Ausgussöffnung ist im Deckelspiegel vorgesehen. Die Ausgussöffnung wird also nicht, wie bei Getränkedosen sonst üblich, erst durch eine Metalllasche beim erstmaligen Öffnen aufgebrochen.

Der Dosendeckel weist ein Betätigungselement auf, welches an einer Oberseite des Deckelspiegels, welche einem Innenraum der Dose bei daran angebrachtem Dosendeckel abgewandt ist, angeordnet ist. Zudem weist der Dosendeckel ein Verschlusselement auf, welches an einer Unterseite des Deckelspiegels, welche einem Innenraum der Dose bei daran angebrachtem Dosendeckel zugewandt ist, angeordnet ist. Das Verschlusselement ist zwischen einer Schließstellung, in welcher das Verschlusselement die Ausgussöffnung fluiddicht und/oder gasdicht verschließt, und einer Offenstellung, in welcher die Ausgussöffnung wenigstens teilweise freigegeben ist, im Wesentlichen translatorisch entlang des Deckelspiegels geführt mittels des Betätigungselements verschiebbar. Die translatorische Bewegung ist sehr intuitiv, belastet eine Verbindung zwischen Verschlusselement und Betätigungselement wenig und erfordert geringe Betätigungskräfte.

Das Verschlusselement ist an seiner Unter- und/oder Oberseite vorzugsweise nicht eben. Insbesondere kann das Verschlusselement an seiner Unter- und/oder Oberseite eine oder mehrere Aussparungen oder einen oder mehrere vorstehende Bereiche aufweisen. Eine solche Aussparung kann beispielsweise im Bereich einer Verbindung mit dem Betätigungselement ausgebildet sein. An der Unterseite können z.B. mehrere Rippen vorgesehen sein.

Das Verschlusselement und das Betätigungselement sind mittels einer Verbindung aneinander befestigt. Die Verbindung ist vorzugsweise fest und/oder in ihrer Länge nicht variabel. In anderen Worten ist der Abstand zwischen Betätigungselement und Verschlusselement im Bereich der Verbindung vorzugsweise fest und/oder nicht variabel. Dies ermöglicht u.a. eine automatische Anpassung des Anpressdrucks des Verschlusselements an den Deckel, worauf unten näher eingegangen wird.

Vorzugsweise sind das Verschlusselement und das Betätigungselement mittels einer das Verschlusselement nicht durchdringenden Verbindung aneinander befestigt. So wird der Inhalt der Dose zuverlässig geschützt. Insbesondere können so unerwünschte Leckagen bei geschlossenem Deckel ausgeschlossen werden. Eine solche Verbindung ist vorteilhaft, da eine Durchgangsöffnung zur Verbindung nur mit großem Aufwand abgedichtet werden kann und unter Druck zu Leckagen neigt. Besonders geeignet ist eine Schweißverbindung, da ein geringer Materialeinsatz notwendig ist. Beispielsweise können das Betätigungselement und das Verschlusselement mit Ultraschall oder Reibschweißen miteinander befestigt werden, insbesondere bei Verwendung von Kunststoffen zur Herstellung des Verschlusselements und/oder des Betätigungselements.

Bei Verschiebung des Verschlusselements aus der Schließstellung in die Offenstellung kann die Verbindung entlang eines Führungsschlitzes in dem Deckelspiegel bewegt werden. Die Verbindung, insbesondere ein Schweißbereich, kann also in einer durch den Deckelspiegel definierten Ebene angeordnet sein. Insbesondere kann die Verbindung den Deckelspiegel durchdringen, also in einer Durchgangsöffnung des Deckelspiegels angeordnet sein. Die Verbindung kann so als Führung dienen. Zudem kann eine Bauhöhe des Dosendeckels so besonders flach sein, wodurch sich Vorteile bei der Abfüllung ergeben. Beispielsweise bestimmt die Bauhöhe, wie viele Dosendeckel in einem Magazin vorgesehen werden können. Dünne wiederschließbare Dosendeckel erlauben ähnliche Magazinfüllungen wie nicht wiederverschließbare Dosendeckel, womit eine Produktionsrate gegenüber nicht wiederschließbaren Dosen auf der gleichen Abfüllanlage gleich oder nur geringfügig geringer ist.

Das Betätigungselement weist einen Befestigungsabschnitt auf, welcher die Verbindung mit dem Verschlusselement aufweist. Dadurch kann das Betätigungselement vorteilhaft mit dem Verschlusselement verbunden werden, ohne dass dadurch die Gestaltung anderer Abschnitte des Betätigungselements eingeschränkt wird. Insbesondere können andere Abschnitte des Betätigungselements dazu ausgebildet sein, relativ zu dem Befestigungsabschnitt, und damit relativ zu der Verbindung mit dem Verschlusselement bewegt, insbesondere verschwenkt, zu werden. Weiterhin weist das Betätigungselement einen Arretierabschnitt auf, mittels welchem das Betätigungselement wenigstens vor einem erstmaligen Verstellen aus der Schließstellung in die Offenstellung an dem Deckelspiegel in der Schließstellung arretiert ist. Durch die Arretierung kann eine Transportsicherung bereitgestellt werden. Mit der Arretierung kann ein ungewolltes Öffnen der Dose bzw. ein Verstellen des Verschlusselements aus der Schließstellung in die Offenstellung zuverlässig verhindert werden. Zudem kann der Arretierabschnitt auch als Originalitätsmerkmal ausgebildet sein, welches einem Benutzer eine erstmalige Öffnung des Dosendeckels anzeigen kann. Dadurch wird ein hygienisch einwandfreier Doseninhalt gewährleistet. Das Betätigungselement weist einen Griffabschnitt auf, welcher zum Greifen Zwecks der Verstellung zwischen der Offenstellung und der Schließstellung ausgebildet ist. Der Griffabschnitt kann so unabhängig von dem Arretierabschnitt und/oder dem Befestigungsabschnitt gestaltet werden, wodurch dieser besonders ergonomisch sein kann. Dies erleichtert das Betätigen, also das Verschließen und Öffnen, des Dosendeckels.

Der Befestigungsabschnitt ist mit dem Griffabschnitt über ein erstes Gelenk verbunden, das eine erste Gelenkachse aufweist. Der Arretierabschnitt ist mit dem Griffabschnitt über ein zweites Gelenk verbunden, das eine zweite Gelenkachse aufweist. Dies ermöglicht eine Kopplung der Bewegung des Griffabschnitts mit dem Arretierabschnitt. Beispielsweise kann ein Verschwenken des Griffabschnitts in eine Betätigungsstellung gleichzeitig ein Verschwenken des Arretierabschnitts bewirken, so dass eine Arretierung gelöst wird. In einem bestimmten Schwenkbereich kann eine Bewegung des Griffabschnitts von dem Arretierabschnitt entkoppelt sein. Beispielsweise kann der Griffabschnitt leicht angehoben werden, ohne dass der Arretierabschnitt mit angehoben wird. Dadurch kann beispielsweise ein Originalitätssiegel gebrochen werden. Zudem kann so ein unabsichtliches Lösen der Arretierung vermieden werden. Zudem können so anfängliche Bedienkräfte gering sein, beispielsweise wenn der Griffabschnitt noch eng am Deckelspiegel anliegt und schwierig zu greifen ist. Erst wenn der Griffabschnitt soweit verschwenkt ist, dass dieser gut zu greifen ist, ist dann eine Betätigungskraft zum Lösen der Arretierung notwendig. Diese Kraft kann dann bereits leicht durch den guten Griff aufgebracht werden.

Der Deckelspiegel hat vorzugsweise einen Außendurchmesser von mindestens 4,5 cm, mindestens 5 cm oder mindestens 5,5 cm. Der Deckelspiegel kann in seinen äußeren Abmessungen, abgesehen von Durchgangsöffnungen, einem standardisierten Deckelspiegel von Getränkedosen entsprechen, insbesondere einem B64 oder CDL Deckelspiegel. Der B64 Deckelspiegel kann z.B. vom Typ 200, 202, 204, 206 oder 209 sein. Der CDL Deckelspiegel kann z.B. vom Typ 200 oder 202 sein.

Der Deckelspiegel kann im Wesentlichen flach und/oder rund ausgebildet sein, vorzugsweise kreisförmig. Der Deckelspiegel kann eine umlaufende Sicke aufweisen, welche dessen Stabilität erhöht und beim Bilden des Falzrands hilft. Der Deckelspiegel kann auch als Shell bezeichnet werden.

Alle metallischen Teile des Dosendeckels sind vorzugsweise auf der einem Aufbewahrungsraum der Dose zugwandten Flachseite, vorzugsweise auch der abgewandten Flachseite, mit Kunststoff beschichtet oder einer Kunststofffolie bezogen. Dies dient dem Korrosionsschutz und dem Schutz des in der Dose aufbewahrten Stoffs. Beispielsweise kann so ein Auflösen von Metall durch eine in der Dose befindliche Flüssigkeit verhindert werden. Es kann so beispielsweise auch verhindert werden, das Metallpartikel in ein Getränk gelangen. Bei Teilen, welche aus Kunststoff gebildet sind, kann auf eine solche Beschichtung verzichtet werden. Dadurch sind diese Teile kostengünstig in der Herstellung, robust und einfach zu recyclen. Insbesondere können jeweilige Kunststoffteile nur aus einem Werkstoff bestehen. Das Verschlusselement kann im Wesentlichen flach und/oder rund ausgebildet sein
Die Dose, für welche der Dosendeckel vorgesehen ist, ist vorzugsweise zur Aufbewahrung eines Getränks, einer Suppe oder eines Schüttguts vorgesehen. Das Getränk kann z.B. Fasern, wie Fruchtfleisch bei einem Orangensaft, enthalten. Das Schüttgut kann beispielsweise ein Gewürz sein. Suppe kann z.B. Stückgut wie Nudeln, Fleischstücke, etc. aufweisen. Vorzugsweise ist die Ausgussöffnung groß genug, um diese mit ausschütten zu können. Zu diesem Zweck kann das Verschlusselement eine Ausgussöffnung in der Offenstellung freigeben, welche größer als feste Körper in der Dose ist. Die Ausgussöffnung kann eine Durchgangsöffnung von einem Innenraum nach außerhalb der Dose sein. Eine Querschnittfläche der Ausgussöffnung beträgt vorzugsweise mindestens 1,5 cm², noch bevorzugter mindestens 1,8 cm² und ganz bevorzugt mindestens 2 cm².

Die Ausgussöffnung hat vorzugsweise eine ovale, kreisförmige oder halbmondförmige Form. Ein in Längsrichtung des Führungsschlitzes vorderer und ein in Längsrichtung des Führungsschlitzes hinterer Randbereich der Ausgussöffnung ist vorzugsweise bogenförmig und/oder gekrümmt. Dabei ist vorzugsweise sowohl ein vorderer Randbereich wie auch ein hinterer Randbereich in die gleiche Richtung gekrümmt. Hierdurch bildet der Deckelspiegel am Randbereich der Ausgussöffnung, an dem der Führungsschlitz angeordnet ist, vorzugsweise zwei in die Ausgussöffnung hineinragende Zungen. Durch diese Zungen kann die Verbindung in einer vordersten Position des Verschlusselements geführt sein.

Der Führungsschlitz kann eine Durchgangsöffnung in dem Deckelspiegel sein. Vorzugsweise ist der Führungsschlitz als längliche Öffnung ausgebildet. Eine Breite des Führungsschlitzes kann im Wesentlichen konstant über dessen Länge ausgebildet sein. Der Führungsschlitz kann die translatorische Bewegung von Verschlusselement und Betätigungselement zwischen der Schließstellung und der Offenstellung vorgeben. Wenigstens ein Teilbereich des Verschlusselements und/oder des Betätigungselements kann durch den Führungsschlitz geführt sein, beispielsweise indem dieser Teilbereich an einer den Führungsschlitz begrenzenden Kante des Deckelspiegels anliegt. Jeweilige seitliche Wände des Führungsschlitzes, welche vorzugsweise einen radial inneren Rand des Deckelspiegels bilden und/oder eine Kante des Deckelspiegels sind, können also eine Führung bilden.

Die Ausgussöffnung und/oder der Führungsschlitz sind vorzugsweise ausgestanzt. Es kann sich um ausgestanzte Durchgangsbereiche in dem Deckelspiegel handeln. Das Verschlusselement kann den Innenraum gegenüber der Ausgussöffnung in Schließstellung abdichten, beispielsweise mittels einer Dichtung und/oder durch Anpressen an den Deckelspiegel. Dieses Anpressen kann durch eine Vorspannung und/oder die Verbindung mit dem Betätigungselement bewirkt werden. Das Betätigungselement kann sich gemeinsam mit dem Verschlusselement bewegen, also ebenfalls vorzugsweise im Wesentlichen translatorisch entlang dem Deckelspiegel geführt. Durch deren Verbindung, beispielsweise durch die Schweißverbindung, sind Betätigungselement und Verschlusselement bei normaler Benutzung dauerhaft miteinander verbunden. Bei einem bestimmungsgemäßen Gebrauch, wie einem Öffnen und Schließen der Dose, ist es vorzugsweise nicht vorgesehen, dass das Betätigungselement und das Verschlusselement voneinander getrennt werden. Die Verbindung kann dazu ausgebildet sein, das Betätigungselement und das Verschlusselement an dem Deckelspiegel zu halten. Vorzugsweise steht die Verbindung unter einer Vorspannung. Das Betätigungselement kann durch die Vorspannung bombiert sein. Die Bombierung ist vorzugsweise in eine Richtung ausgebildet, welche durch einen erhöhten Innendruck und/oder ein Drücken auf das Betätigungselement verringert wird. Dies erleichtert das Öffnen.

In der Schließstellung deckt das Verschlusselement vorzugsweise die Ausgussöffnung und den Führungsschlitz gas- und/oder fluiddicht ab. Das Verschlusselement erstreckt sich bevorzugt weiter über den Deckelspiegel als Ausgussöffnung und Führungsschlitz zusammen. Jeweilige Außenkanten des Verschlusselements sind in der Schließstellung bevorzugt radial außerhalb jeweiliger Durchgangsöffnungen in dem Deckelspiegel angeordnet. Ein Durchmesser und/oder eine Länge des Verschlusselements, insbesondere ein Durchmesser und/oder eine Länge eines durch eine Dichtung des Verschlusselements umgebenen Bereichs, ist vorzugsweise größer als eine Länge zwischen einem vorderen Punkt der Ausgussöffnung, insbesondere einem Scheitelpunkt der Ausgussöffnung, und einem gegenüberliegenden hinteren Ende des Führungsschlitzes.

Das Betätigungselement erstreckt sich bevorzugt weiter über den Deckelspiegel als Ausgussöffnung und Führungsschlitz zusammen, insbesondere in der Schließstellung. Bevorzugt bedeckt das Betätigungselement in der Schließstellung die Ausgussöffnung und den Führungsschlitz. Dadurch kann eine Ansammlung von Verschmutzung auf dem Verschlusselement, in dem Führungsschlitz und/oder in der Ausgussöffnung verhindert werden. Wird der Dosendeckel entlang einer Achse senkrecht zum Deckelspiegel, bei aufrechtstehender Getränkedose also in Vertikalrichtung, betrachtet, ist das Verschlusselement vorzugsweise so ausgebildet, dass es die Ausgussöffnung und/oder den Führungsschlitz in der Schließstellung vollständig überlappt. In der Offenstellung gibt das Verschlusselement mindestens 50%, vorzugsweise mindestens 70% und stärker bevorzugt mindestens 90%, der Fläche der Ausgangsöffnung frei. Durch die freigegebene Fläche ist der Doseninhalt daher unmittelbar zugänglich, etwa über einen Strohhalm. D.h., ein gerader Strohhalm kann in dem gesamten nicht überlappten Bereich entlang der Sichtachse (Vertikalrichtung der Dose) ohne Biegen oder Knicken durch die Ausgangsöffnung geführt werden. Dies entspricht der dem Konsumenten bei üblichen Getränkedosen bekannten Weise. Zudem kann dies das Ausschütten von Flüssigkeiten mit Fasern oder Stückgut erleichtern.

Die Oberseite des Dosendeckels und/oder jeweilige Teile kann auch als Außenseite bezeichnet werden. Ebenso kann die Unterseite auch als Innenseite bezeichnet werden. Vorzugsweise ist nur eine einzige Verbindung, beispielsweise ein einziger Schweißpunkt, zwischen Betätigungselement und Verschlusselement vorgesehen. Dadurch ist die Herstellung des Dosendeckels besonders schnell und kostengünstig.

Vorzugsweise ist die Verbindung zwischen dem Verschlusselement und dem Betätigungselement wenigstens teilweise durch einen Vorsprung auf dem Verschlusselement und/oder dem Betätigungselement gebildet. Dieser Vorsprung erstreckt sich beispielsweise in der Offenstellung und/oder in der Schließstellung zumindest teilweise durch den Führungsschlitz. Vorzugsweise erstreckt sich der Vorsprung in der Offenstellung und in der Schließstellung zumindest teilweise durch den Führungsschlitz. Der Vorsprung kann so auch als Teil der Führung dienen. Zudem wird hierdurch vorzugsweise eine Sicherung des Betätigungselements gegen Verdrehen bereitgestellt. Der Vorsprung kann sich in der Schließstellung zumindest teilweise auch durch die Ausgussöffnung erstrecken.

Vorzugsweise ist der Griffabschnitt zwischen einer Verstaustellung, in welcher der Griffabschnitt im Wesentlichen parallel zu dem Deckelspiegel und/oder dem Befestigungsabschnitt angeordnet ist, und einer Betätigungsstellung, in welcher der Griffabschnitt für das Verstellen zwischen der Offenstellung und der Schließstellung greifbar ist, schwenkbar. Vorzugsweise ist der Griffabschnitt nach oben verschwenkbar, insbesondere im Wesentlichen ausschließlich nach oben verschwenkbar aus seiner Verstaustellung. Der Griffabschnitt kann von der Verstaustellung in die Betätigungsstellung vorzugsweise entgegen der Verschiebungsrichtung geschwenkt werden, in der das Verschlusselement von der Schließstellung in die Offenstellung verschiebbar ist. Die Stapelhöhe des Dosendeckels beim Abfüllen ist so besonders gering, aber der Griffabschnitt beim Betätigen trotzdem einfach zu greifen. Der Griffabschnitt ist vorzugsweise flach und in der Verstaustellung in Richtung senkrecht zum Deckelspiegel weniger als 3 mm, bevorzugt weniger als 2 mm, dick. Eine Oberseite des Griffabschnitts ist vorzugsweise im Wesentlichen eben. In der Verstaustellung bilden die Oberseite des Befestigungsabschnitts und die Oberseite des Griffabschnitts im Wesentlichen eine Ebene. Wenn sich der Griffabschnitt in der Verstaustellung befindet, kann das Betätigungselement im Wesentlichen plan sein.

Bei Verstellung von der Verstaustellung in die Betätigungsstellung wird der Griffabschnitt vorzugsweise nach oben geschwenkt. Insbesondere wird ein hinterer Endbereich des Griffabschnitts, der von der Ausgussöffnung am weitesten beabstandet ist, nach oben geschwenkt. Vorzugsweise ist die Unterseite des Griffabschnitts in der Verstaustellung zumindest abschnittsweise von der Oberseite des Deckelspiegels beabstandet. Der Griffabschnitt kann dadurch mit einem Finger, beispielsweise mittels des Fingernagels, einfach angehoben werden. Vorzugsweise ist die Unterseite des Griffabschnitts in der Betätigungsstellung zumindest abschnittsweise, und vorzugsweise vollständig, von der Oberseite des Deckelspiegels beabstandet. Der Griffabschnitt kann dadurch wenigstens teilweise umfasst werden, etwa mit zwei Fingern, sodass Kraft in einer Richtung parallel zur Oberseite des Deckelspiegels ausgeübt werden kann. Ein Schwenken des Griffabschnitts kann ein Hochklappen sein, vorzugsweise Hochklappen um einen Winkel von mindestens 30°, bevorzugt mindestens 45°, besonders bevorzugt mindestens 60°. Vorzugsweise wird der Griffabschnitt entgegen der Bewegungsrichtung des Betätigungselements und/oder des Verschlusselements von der Schließstellung in die Offenstellung nach oben geschwenkt.

Der Griffabschnitt kann dazu ausgebildet sein, zum Verstellen zwischen der Verstaustellung und der Betätigungsstellung relativ zu dem Befestigungsabschnitt um die erste Gelenkachse geschwenkt zu werden. Das Gelenk erleichtert die Betätigung des Betätigungselements, insbesondere das Verschwenken des Griffabschnitts.

Vorzugsweise sind das Verschlusselement und/oder das Betätigungselement jeweils aus einem Kunststoff gebildet. Insbesondere können das Verschlusselement und/oder das Betätigungselement jeweils aus einem Kunststoff bestehen. Die beiden Gelenke und jeweiligen Abschnitte des Betätigungselements können so besonders einfach gefertigt werden, insbesondere einstückig in einem Spritzgussprozess. Das Verschlusselement kann so ohne zusätzliche Maßnahmen, wie Beschichtungen, einem Doseninhalt widerstehen. Zudem kann der Dosendeckel so besonders leicht sein.

Vorzugsweise sind das erste Gelenk und/oder das zweite Gelenk als Filmscharnier ausgebildet. Entsprechend können die beiden Gelenke auch als erstes Filmscharnier und zweites Filmscharnier bezeichnet werden. Filmscharniere sind bei Kunststoffteilen besonders einfach zu fertigen, insbesondere einstückig mit anderen Abschnitten. Das Filmscharnier kann durch einen Bereich im Betätigungselement mit geringerer Gesamtdicke gebildet sein, insbesondere in Form einer Kerbe, die z.B. durch Spritzgießen, Prägen oder Ritzen hergestellt sein kann. Ein Filmscharnier ist robust, erfordert aber geringe Betätigungskräfte zum relativen Verschwenken jeweiliger damit verbundener Abschnitte. Das Filmscharnier kann weiterhin den Vorteil haben, dass sich dieses bleibend verformt und der Griffabschnitt nach dem Schwenken entgegen der Schwerkraft in der Betätigungsstellung verbleibt.

Vorzugsweise ist das erste Gelenk durch eine Einkerbung gebildet wird, die sich von einer oberen Fläche des Betätigungselements nach unten in das Betätigungselement erstreckt. Dadurch kann eine Ausgangsstellung definiert werden, bei welcher der Griffabschnitt im Wesentlichen parallel zum Deckelspiegel erstreckt. In dieser Stellung kann ein Bereich der Unterseite des Griffabschnitts, welcher zu dem ersten Gelenk benachbart ist, über das erste Gelenk mit dem sich dran anschließenden Bereich der Unterseite des Befestigungsabschnitts eine Ebene bilden. Eine Einkerbung kann eine besonders einfache Form eines Filmscharniers sein. Die beiden Kerbflächen des ersten Gelenks an der Oberseite des Betätigungselements können zudem eine Betätigungsstellung des Griffabschnitts und/oder einen maximalen Schwenkwinkel relativ zu dem Befestigungsabschnitt definieren. In dieser Stellung liegen die beiden Kerbflächen aneinander an. Die beiden Kerbflächen können so einen Anschlag für das erste Gelenk bilden. Bei aneinander anliegenden Kerbflächen können jeweilige Betätigungskräfte besonders gut abgestützt und an das Verschlusselement geleitet werden, wodurch der Dosendeckel besonders robust ist.

Vorzugsweise ist das zweite Gelenk durch eine Einkerbung gebildet wird, die sich von einer unteren Fläche des Betätigungselements nach oben in das Betätigungselement erstreckt. Dadurch kann eine Arretierstellung definiert werden, bei welcher sich der Arretierabschnitt im Wesentlichen parallel zum Deckelspiegel erstreckt. In dieser Stellung kann ein Bereich der Oberseite des Arretierabschnitts, welcher zu dem zweiten Gelenk benachbart ist, über das zweite Gelenk mit dem sich dran anschließenden Bereich der Oberseite des Griffabschnitts eine Ebene bilden. Eine Einkerbung kann eine besonders einfache Form eines Filmscharniers sein. Die beiden Kerbflächen des zweiten Gelenks an der Unterseite des Betätigungselements können zudem eine Kopplungsstellung des Arretierabschnitts bzw. einen maximalen Schwenkwinkel relativ zu dem Griffabschnitt definieren. In dieser Stellung liegen die beiden Kerbflächen aneinander an. Die beiden Kerbflächen können somit einen Anschlag für das zweite Gelenk bilden.

Ein Verschwenken des Griffabschnitts, insbesondere in Richtung seiner Betätigungsstellung, bewirkt vorzugsweise ein gekoppeltes Verschwenken des Arretierabschnitts. Dadurch kann beispielsweise mit einer einzigen Schwenkbewegung eine Arretierung gelöst werden und/oder ein Originalitätssiegel des Dosendeckels gebrochen werden.

Beispielsweise kann ein Verschwenken des Griffabschnitts mit dem Arretierabschnitt derart gekoppelt sein, dass ein Verschwenken des Griffabschnitts in Richtung seiner Betätigungsstellung wenigstens in einem Teilbereich der Schwenkbewegung auch ein Verschwenken des Arretierabschnitts bewirkt. Insbesondere kann dadurch der Arretierabschnitt aus einer Arretierstellung, in welcher das Betätigungselement in seiner Schließstellung arretiert ist, in eine Freigabestellung, in welcher die Arretierung aufgehoben ist, verstellt, insbesondere verschwenkt werden. Eine umgekehrte Schwenkbewegung des Griffabschnitts in seine Verstaustellung bewirkt vorzugsweise nicht, dass der Arretierabschnitt wieder selbstständig in seine Arretierstellung verstellt wird. In diese Schwenkrichtung kann ein Schwenken des Arretierabschnitts also wenigstens teilweise von einem Schwenken des Griffabschnitts entkoppelt sein. Beispielsweise kann diese Form der Kopplung einfach durch zwei Filmscharniere und/oder Einkerbungen realisiert werden.

Vorzugsweise ist der Griffabschnitt gegenüber dem Befestigungsabschnitt entlang der ersten Gelenkachse nach oben schwenkbar, insbesondere aus seiner Ausgangsstellung in die Betätigungsstellung. Vorzugsweise ist der Arretierabschnitt gegenüber dem Griffabschnitt entlang der zweiten Gelenkachse nach unten schwenkbar. Die Schwenkrichtungen können insbesondere durch eine entsprechende Einkerbung und/oder eine parallele Ausrichtung jeweiliger zu den Gelenken benachbarter Bereiche vorgegeben sein.

Vorzugsweise erstrecken sich die erste Gelenkachse und/oder die zweite Gelenkachse quer, bevorzugt orthogonal, zu einer Längsachse des Führungsschlitzes. Dadurch kann eine Betätigung des Dosendeckels besonders intuitiv sein. Alternativ oder zusätzlich erstrecken sich die erste Gelenkachse und die zweite Gelenkachse parallel zueinander, wodurch die jeweiligen Schwenkbewegungen vorteilhaft zumindest in gewissen Schwenkbereichen besonders gut gekoppelt werden können. Zudem kann die Betätigung des Dosendeckels so ebenfalls besonders intuitiv sein. Die erste Gelenkachse und die zweite Gelenkachse sind voneinander beabstandet.

Die zweite Gelenkachse ist zwischen der ersten Gelenkachse und dem Arretierabschnitt angeordnet.

Vorzugsweise ist entlang des Betätigungselements in Verschiebungsrichtung des Verschlusselements zunächst die erste Gelenkachse und dann die zweite Gelenkachse angeordnet. Hierdurch sind vorteilhafte Kopplungen zwischen Griffabschnitt und Arretierabschnitt möglich.

Vorzugsweise verläuft das erste Gelenk über die gesamte Breite des Griffabschnitts und/oder des Befestigungsabschnitts. Dadurch kann die gelenkige Verbindung besonders stabil sein.

Vorzugsweise verläuft das zweite Gelenk über die gesamte Breite des Arretierabschnitts und/oder nur über einen Teil der Breite des Griffabschnitts, insbesondere nur über einen mittleren Teil des Griffabschnitts. Dadurch kann nur ein Teilbereich des Griffabschnitts mit dem Arretierabschnitt verbunden sein, wobei der übrige Teil mit dem Befestigungsabschnitt verbunden sein kann. Dies ermöglicht eine kompakte Gestaltung, insbesondere mit einer Verschachtelung. Beispielsweise kann der Arretierabschnitt so, insbesondere gesehen in einer Vertikalrichtung des Dosendeckels, vollständig innerhalb des Griffabschnitts angeordnet sein.

Vorzugsweise ist der Griffabschnitt mit dem Arretierabschnitt mittels wenigstens einem Stegelement verbunden, insbesondere an einem dem zweiten Gelenk abgewandten Ende des Arretierabschnitts. Es können auch mehrere voneinander beabstandete Stegelemente vorgesehen sein, mittels welchen der Griffabschnitt mit dem Arretierabschnitt verbunden ist. Die jeweiligen Stegelemente bilden dabei vorzugsweise nicht das zweite Gelenk, sondern sind zusätzlich zu dem zweiten Gelenk vorgesehen. Das Stegelement kann dazu ausgebildet sein, bei einem relativen Schwenken des Griffabschnitts zu dem Arretierabschnitt, insbesondere bei einem erstmaligen Verschwenken des Griffabschnitts aus seiner Verstaustellung in seine Betätigungsstellung, zu brechen. Die jeweiligen Stegelemente bilden so ein Originalitätssiegel. Damit ist für den Benutzer optisch erkennbar, ob der Dosendeckel bereits erstmalig geöffnet war. Zudem kann bei dem Brechen auch ein Geräusch erzeugt werden, womit auch akustisch signalisiert werden kann, dass der Dosendeckel noch nicht geöffnet war.

Vorzugsweise ist das Stegelement aus einem Kunststoff ausgebildet ist, insbesondere dem gleichen Kunststoff wie das restliche Betätigungselement. Alternativ oder zusätzlich ist das Stegelement einstückig mit dem Griffabschnitt und dem Arretierabschnitt ausgebildet. So kann das Betätigungselement in einem einzigen Spritzugussschritt integral gefertigt werden.

Vorzugsweise hat der Griffabschnitt eine Ausgangsstellung, welche vorzugsweise der Verstaustellung entspricht. Das Betätigungselement kann so ausgebildet sein, dass sich der Griffabschnitt nach einem erstmaligen Verstellen aus der Ausgangsstellung nicht mehr bleibend in die Ausgangsstellung rückverstellen lässt. Alternativ oder zusätzlich kann das Betätigungselement so ausgebildet sein, dass es sich bei einem erstmaligen Verstellen des Griffabschnitts aus der Ausgangsstellung plastisch verformt, insbesondere dauerhaft und/oder bleibend optisch erkennbar. Beispielsweise kann der Griffabschnitt in der Betätigungsstellung verbleiben. Alternativ oder zusätzlich kann sich auch das Arretierabschnitt dauerhaft plastisch verformen und/oder nicht mehr bleibend in seine Ausgangsstellung nach einem erstmaligen Verstellen rückverstellen. Bei der Ausgangsstellung des Arretierabschnitts kann es sich um dessen Arretierstellung handeln. Der Griffabschnitt und/oder der Arretierabschnitt kann sich selbstständig lediglich in eine teilwiese rückverstellte Stellung rückverstellen, welche sich insbesondere optisch von der Ausgangsstellung unterscheidet. Insbesondere kann keine Rückverformung in die Ausgangstellung durch einen bestimmungsgemäßen Gebrauch erfolgen. Die Verformung kann so ausgebildet sein, dass diese nicht ohne optisch erkennbar zu sein vom Nutzer rückgängig gemacht werden kann. Dadurch kann ein Originalitätsmerkmal bereitgestellt werden, an welchem ein Nutzer erkennen kann, ob eine Dose bzw. ein Dosendeckel bereits geöffnet gewesen ist. Dies ist insbesondere aus Hygienegründen vorteilhaft.

Vorzugsweise weist der Befestigungsabschnitt an seiner Unterseite einen Vorsprung auf, welcher mit einem Teilbereich des Verschlusselements verbunden ist, wobei der Vorsprung wenigstens teilweise in dem Führungsschlitz des Deckelspiegels angeordnet ist. Alternativ oder zusätzlich weist das Verschlusselement an seiner Oberseite einen Vorsprung auf, welcher mit einem Teilbereich des Befestigungsabschnitts verbunden ist, wobei der Vorsprung vorzugsweise wenigstens teilweise in dem Führungsschlitz des Deckelspiegels angeordnet ist. Die jeweiligen Vorsprünge können so einen Teil der translatorischen Führung bilden und auch eine Verdrehsicherung. Die jeweiligen Vorsprünge können auch dazu genutzt werden, eine gewisse Vorspannung auf das Verschlusselement und/oder das Betätigungselement auszuüben, womit Betätigungskräfte zum Verschieben und/oder die Pressung für eine Abdichtung eingestellt werden kann. Der Vorsprung des Verschlusselements korrespondiert vorzugsweise zu dem Vorsprung des Befestigungsabschnitts.

Der Vorsprung des Verschlusselements kann an seinem unteren Ende spitz und/oder dachförmig zulaufen. Diese Form des Vorsprungs kann die Verbindungsfläche bei einer Verschweißung zum Bilden der Verbindung besonders gut definieren. Insbesondere ist eine initiale Schmelze bei einem Ultraschallverschweißen klein und dieser Prozess so gut für eine besonders feste Verbindung steuerbar.

Optional ist wenigstens eine Breite des Vorsprungs des Befestigungsabschnitts und/oder eine Breite des Vorsprungs des Verschlusselements schmäler als der Führungsschlitz ausgebildet, insbesondere eine Breite senkrecht zur Verschiebungsrichtung des Verschlusselements. Dadurch kann dieser besonders gut im Führungsschlitz angeordnet werden und auch einfach als Verdrehsicherung genutzt werden. Die Breite wird vorzugsweise quer zu einer Längsachse gemessen, die sich zwischen einer vorderen Öffnung des Führungsschlitzes und einem hinteren Ende des Führungsschlitzes erstreckt, insbesondere orthogonal zu dieser Längsachse. Die Breite kann auch orthogonal zu einer Vertikalrichtung sein. Die Dicke kann in der Vertikalrichtung gemessen werden. Die Vertikalrichtung ist vorzugsweise senkrecht zur Ebene, in der sich der Deckelspiegel erstreckt.

Die Länge des Vorsprungs ist vorzugsweise größer als seine Breite, z.B. mindestens 1,5, mindestens 2 oder mindestens 3 Mal so lang wie der Vorsprung breit ist.

Vorzugsweise ist der Vorsprung des Verschlusselements wenigstens teilweise in dem Vorsprung des Befestigungsabschnitts angeordnet. Insbesondere kann der Vorsprung des Befestigungsabschnitts durch eine umlaufend geschlossene und rechteckige Wand ausgebildet sein. Alternativ oder zusätzlich kann der Vorsprung des Verschlusselements eine rechteckige Grundfläche aufweisen, insbesondere korrespondierend zu einer durch die umlaufend geschlossene und rechteckige Wand des Vorsprungs des Befestigungsabschnitts eingeschlossene Fläche. Solche Ausgestaltungen verbessern die Prozesssicherheit beim Ultraschallschweißen und eine Festigkeit der resultierenden Verbindung. Alternativ oder zusätzlich weist das Verschlusselement eine den Vorsprung des Verschlusselements umgebende Nut auf, welche vorzugsweise zu der umlaufend geschlossenen und rechteckigen Wand des Befestigungsabschnitts korrespondiert. Die Nut kann ein Abfließen von Schmelze beim Schweißen ermöglichen, wodurch die Verbindung beim Ultraschallschweißen dünner ausgebildet werden kann und eine gleichmäßigere und glattere Oberseite des Betätigungselements im Bereich der Verbindung erzeugt werden kann.

Vorzugsweise liegt die Verbindung des Verschlusselements mit dem Betätigungselement wenigstens teilweise zur Führung bei der Verschiebung des Verschlusselements aus der Schließstellung in die Offenstellung an einem den Führungsschlitz wenigstens teilweise begrenzenden Rand des Deckelspiegels an. Dadurch hat das Betätigungselement wenig Spiel beim Verschieben und eine unerwünschte Rotation kann vermieden werden.

Vorzugsweise ist an der Verbindung in einem Bereich, der sich durch den Führungsschlitz erstreckt, mindestens eine ebene Fläche ausgebildet, wobei die mindestens eine ebene Fläche vorzugsweise einem den Führungsschlitz begrenzenden Rand des Deckelspiegels zugewandt ist. Durch diese ebene Fläche kann sich die Verbindung an dem Führungsschlitz abstützen und so besonders gut als Verdrehsicherung fungieren. Vorzugsweise sind an der Verbindung in einem Bereich, der sich durch den Führungsschlitz erstreckt, mindestens zwei ebene Flächen ausgebildet. Die zwei ebenen Flächen sind bevorzugt an gegenüberliegenden Seiten und/oder im Wesentlichen parallel ausgebildet. Vorzugsweise ist die mindestens eine ebene Fläche am Vorsprung ausgebildet. Vorzugsweise sind die mindestens zwei ebenen Flächen am Vorsprung ausgebildet. Die jeweiligen ebenen Flächen können sich an dem den Führungsschlitz begrenzenden Rand des Deckelspiegels abstützen und eine Verdrehsicherung bereitstellen. Die ebenen Flächen können insbesondere durch den Vorsprung des Betätigungselements gebildet werden.

Die jeweiligen ebenen Flächen erstrecken sich vorzugsweise in Richtung senkrecht zur Ebene des Deckelspiegels, also in Vertikal- bzw. Hochrichtung, und/oder parallel zur Längsachse des Führungsschlitzes und/oder parallel zu dem den Führungsschlitz begrenzenden Rand des Deckelspiegels. Statt einer ebenen Fläche kann auch eine gewölbte, gestufte oder gezahnte Fläche vorgesehen werden, die mindestens zwei definierte Anlagepunkte mit dem den Führungsschlitz begrenzenden Rand des Deckelspiegels bereitstellt. Auch so kann eine Verdrehsicherung bereitgestellt werden.

Optional kann am Verschluss und/oder Betätigungselement ein weiterer Vorsprung zur Führung vorgesehen werden.

Vorzugsweise ist das Betätigungselement mit dem Verschlusselement mittels einer Ultraschall- oder Reibverschweißung verbunden, vorzugsweise mittels einer Ultraschall- oder Reibverschweißung an einer einzigen Stelle. Eine Verschweißung nur an einer einzigen Stelle ist kostengünstig und platzsparend. Die Ultraschall- oder Reibverschweißung hat zudem den Vorteil, dass der Verbindungsbereich nicht von außen zugänglich sein muss, beispielsweise für einen Schweißkopf. Beim Ultraschallschweißen kann beispielsweise ein Ultraschallschweißkopf auf der Oberseite des Betätigungselements und/oder der Unterseite des Verschlusselements aufgesetzt werden und dennoch einen Kontaktbereich an der Unterseite des Betätigungselements mit der Oberseite des Verschlusselements verbinden.

Vorzugsweise weist der Dosendeckel wenigstens eine Dichtung auf, welche wenigstens in der Schließstellung des Verschlusselements zwischen dem Verschlusselement und dem Deckelspiegel angeordnet ist. Damit kann ein sicheres und druckdichtes wiederverschließen zuverlässig ermöglicht werden. Vorzugsweise ist nur eine einzige Dichtung vorgesehen, die an Kontaktstellen das Verschlusselement gegen den Deckelspiegel abdichtet. Vorzugsweise liegt das Verschlusselement entlang seines Außenrands nur über die Dichtung am Deckelspiegel an. Zwischen Dichtung und Rand kann ein vertiefter Kanal vorgesehen sein.

Vorzugsweise weist das Verschlusselement im Bereich der Verbindung mit dem Betätigungselement mindestens einen Abstützbereich auf. Insbesondere kann ein erster Abstützbereich innerhalb des Kanals und/oder innerhalb der Dichtung vorgesehen sein. Ein zweiter und dritter Abstützbereich können jeweils spiegelsymmetrisch auf gegenüberliegenden Seiten des Verschlusselements außerhalb des Kanals und/oder außerhalb der Dichtung vorgesehen sein.

Die Dichtung bildet vorzugsweise einen geschlossenen Umfang, etwa nach Art eines O-Rings. Der Querschnitt der Dichtung kann von einem runden Querschnitt abweichen. Die Dichtung kann aus einem flexiblen Material, wie Gummi, Kautschuk oder einem Kunststoff, gebildet sein. Die Dichtung kann umlaufend an einem Rand des Verschlusselements angeordnet sein.

Vorzugsweise ist die Dichtung zumindest teilweise in einer Nut aufgenommen, die auf einer Oberseite des Verschlusselements ausgebildeten ist. Alternativ oder zusätzlich ist die Dichtung gespritzt. Durch die Nut kann die Dichtung sicher gehalten werden, insbesondere bei wiederholtem Öffnen und Schließen. Die Nut kann in dem Verschlusselement radial außenseitig umlaufend angeordnet sein. Die Nut kann in dem Verschlusselement entlang eines Außenrands des Verschlusselements angeordnet sein. Vorzugsweise ist die Nut in Richtung des Deckelspiegels offen. Die Nut kann beispielsweise in einem Spritzgussprozess hergestellt sein. Die Dichtung kann beispielsweise gemeinsam mit dem Verschlusselement und/oder dem Betätigungselement in einem zwei Komponenten-Spritzgussverfahren gemeinsam hergestellt werden. Die Dichtung kann in der Nut allerdings auch mittels einer Verklebung befestigt sein.

Vorzugsweise ist die Dichtung aus einem flexibleren Material als das Verschlusselement und/oder als das Betätigungselement ausgebildet. Die Nut kann auch durch eine lokale Dickenreduktion bereitgestellt werden, z.B. durch Eindrücken oder Abtragen des Materials des Verschlusselements.

Die Dichtung kann eine Hinterschneidung aufweisen. Die Hinterschneidung kann wenigstens teilweise in der Nut angeordnet sein oder auch außerhalb davon. Alternativ oder zusätzlich kann ein Querschnitt des in der Nut aufgenommenen Teilbereichs der Dichtung kleiner als ein Querschnitt der Nut sein. Alternativ oder zusätzlich kann die Dichtung eine sich von radial außen nach radial innen erstreckende Lippe aufweisen, optional mit einer Aussparung unter der Lippe. Die Hinterschneidung und/oder Lippe kann umlaufend ausgebildet sein. Ein Querschnitt der Dichtung kann entsprechend gestaltet sein, um die Lippe, Hinterschneidung und/oder den kleineren Querschnitt als die Nut aufzuweisen. Durch diese jeweiligen Gestaltungen kann das Verschlusselement mit geringeren Betätigungskräften verschoben werden. Zudem ist die Dichtwirkung erhöht. Außerdem kann die Dichtung im Wesentlichen gleich gut bei unterschiedlichen Anpressdrücken abdichten. Beispielsweise kann in einer Getränkedose je nach Temperatur und bei einem kohlensäurehaltigen Getränk durch Bewegungen der Innendruck variieren. Durch die beschriebene Gestaltung der Dichtung kann über einen großen Innendruckbereich zuverlässig abgedichtet werden.

Die Dichtung kann einen runden, eckigen oder irregulären Querschnitt aufweisen.

Optional kann die Dichtung zwei Dichtlippen aufweisen, welche wenigstens in der Schließstellung voneinander beabstandet an dem Verschlusselement oder dem Deckelspiegel anliegen. Bevorzugt liegen die zwei Dichtlippen an einer Unterseite des Deckelspiegels an, wobei die Dichtung in der Nut am Verschlusselement angeordnet ist. Die doppelte Dichtlippe ermöglicht ein sicheres Abdichten auch bei geringem Innendruck, beispielsweise bei einem Getränk ohne Kohlensäure. Es können auch zwei separate Dichtungen mit jeweils mindestens einer Lippe vorgesehen sein.

Vorzugsweise weist der Deckelspiegel und/oder das Verschlusselement eine Kerbe und/oder Prägung in einem Teilbereich auf, welcher einem Teilbereich der Ausgussöffnung, welcher bei dem Verstellen des Verschlusselements von der Schließstellung in die Offenstellung zuerst freigegeben wird, benachbart angeordnet ist oder diesen Teilbereich begrenzt. Dadurch kann bei einer unter Druck stehenden Dose beim Öffnen ein Zischgeräusch erzeugt werden. Dadurch kann einem Verbraucher die frische des Inhalts signalisiert werden. Zudem kann die Akustik so beim Öffnen ähnlich zu einer nicht wiederverschließbaren Dose sein, womit für den Verbraucher eine größere Ähnlichkeit zu den Effekten beim Öffnen und Schließen mit einer herkömmlichen Dose erreicht wird. Die Kerbe oder Prägung kann bei Beginn des Öffnungsvorgangs einen kleinen Kanal und/oder eine Düse bilden. Beispielsweise kann sich die Prägung oder Kerbe verjüngen. Das Zischen kann beispielsweise durch eine Beschleunigung des austretenden Gases auf Überschall erzeugt werden.

Die Kerbe oder Prägung ist vorzugsweise im Bereich des vorderen Endes der Ausgussöffnung angeordnet, welcher einem Scheitelpunkt der Ausgussöffnung entsprechen kann. In der Schließstellung kann das Verschlusselement die Kerbe oder Prägung überlappen. In der Offenstellung kann das Verschlusselement überlappungsfrei mit der Kerbe oder Prägung sein.

Vorzugsweise weist der Deckelspiegel ferner eine Druckausgleichöffnung auf. Die Druckausgleichöffnung kann ebenfalls ein Zischen beim Beginn eines Öffnungsvorgangs erzeugen. Zudem kann eine Betätigungskraft zum Verstellen des Verschlusselements aus der Schließstellung in die Offenstellung reduziert werden. Vorzugsweise ist die Druckausgleichöffnung in der Schließstellung von dem Verschlusselement fluiddicht und/oder gasdicht verschlossen und in der Offenstellung wenigstens teilweise freigegeben. Die Druckausgleichöffnung kann derart angeordnet sein, dass diese beim Verstellen des Verschlusselements von der Schließstellung in die Offenstellung vor der Ausgussöffnung freigegeben wird. Die Druckausgleichöffnung kann als separate Öffnung ausgebildet sein, welche nicht mit der Ausgussöffnung und/oder dem Führungsschlitz verbunden ist. Beispielsweise kann es sich um eine Durchgangsöffnung in dem Deckelspiegel handeln, welche in Verschiebungsrichtung zur Offenstellung vor der Ausgussöffnung angeordnet ist. Die Druckausgleichöffnung ist vorzugsweise im Bereich des vorderen Endes der Ausgussöffnung angeordnet, insbesondere am Scheitelpunkt der Ausgussöffnung. In der Schließstellung kann das Verschlusselement die Druckausgleichöffnung überlappen. In der Offenstellung kann das Verschlusselement überlappungsfrei mit der Druckausgleichöffnung sein.

Die Querschnittfläche der Druckausgleichöffnung ist vorzugsweise kleiner als die Querschnittfläche der Ausgussöffnung. Eine Querschnittfläche der Druckausgleichöffnung kann beispielsweise höchstens 20 mm², bevorzugt höchstens 10 mm² oder besonders bevorzugt höchstens 5 mm² sein. Bevorzugt ist die Druckausgleichöffnung kleiner als ein üblicher Querschnitt eines Strohhalms, welcher auch als Trinkhalm bezeichnet werden kann.

In der Offenstellung ist vorzugsweise zwischen dem Verschlusselement und dem Deckelspiegel ein Luftkanal gebildet, dessen erstes Ende vorzugsweise an der Oberseite des Deckelspiegels und/oder an einem dem äußeren Deckelspiegelrand abgewandten Endbereich an der Ausgussöffnung mündet und dessen zweites Ende vorzugsweise an einer Unterseite des Deckelspiegels an einem der Ausgussöffnung abgewandten Endbereich des Verschlusselements mündet. Das zweite Ende kann einen Innenraum der Dose mit der Außenseite und/oder der Ausgussöffnung verbinden. Dadurch wird eine Rückströmung von Luft erleichtert und/oder die Stärke einer Rückströmung vorgegeben. Dies kann das Ausgießen erleichtern. Beispielsweise kann der Luftkanal einem irregulären und/oder gluckernden Ausguss von Flüssigkeit vorbeugen. So wird ein gleichmäßigeres Ausgießen ermöglicht.

Vorzugsweise ist der Luftkanal in der Schließstellung und/oder in einer Zwischenstellung des Verschlusselements zwischen der Offenstellung und Schließstellung blockiert. Beispielsweise kann der Luftkanal blockiert sein, indem ein Ende oder beide Enden verschlossen sind. Die Zwischenstellung kann beispielsweise eine Stellung sein, bei welcher die Ausgussöffnung nicht so weit wie möglich freigegeben ist, beispielsweise nur höchstens 80%, 70% oder bevorzugt 50%. Das Blockieren kann insbesondere durch das Dichtelement erfolgen, das über den gesamten Umfang des Verschlusselements an einer Unterseite des Deckels anliegt. Beispielsweise kann das Verschlusselement in der Schließstellung und/oder in der Zwischenstellung nicht von dem Deckelspiegel bereichsweise abgehoben sein, was sonst den Luftkanal frei gibt (insbesondere das zweite Ende davon).

Vorzugsweise ist wenigstens ein Teilbereich des Luftkanals durch eine Vertiefung in dem Verschlusselement und/oder dem Deckelspiegel gebildet. Die Vertiefung kann beispielsweise durch eine Prägung gebildet sein. Durch die Vertiefung in dem Deckelspiegel kann das Verschlusselement besonders einfach gestaltet sein. Durch die Vertiefung in dem Verschlusselement kann der Deckelspiegel besonders robust und kostengünstig sein.

Vorzugsweise ist das erste Ende des Luftkanals in der Offenstellung durch eine Lücke zwischen dem Verschlusselement und dem Betätigungselement und/oder zwischen der Dichtung und dem Betätigungselement gebildet, wobei in der Schließstellung vorzugsweise ein Teilbereich des Deckelspiegels in der Lücke angeordnet ist und dadurch den Luftfluss blockiert. Vorzugsweise wird die Lücke durch eine randseitige Aussparung in einer Unterseite des Betätigungselements gebildet. Die Lücke kann dabei einfach durch Verschieben des Betätigungselements und damit des Verschlusselements in die Schließstellung geschlossen werden. Eine solche Bauweise ist kinematisch einfach und zuverlässig.

Vorzugsweise ist das zweite Ende des Luftkanals in der Offenstellung durch eine Lücke zwischen dem Verschlusselement und dem Deckelspiegel und/oder zwischen der Dichtung und dem Deckelspiegel gebildet.

Gemäß einer ersten Variante wird die Lücke durch ein Auslenken des Verschlusselements an einem dem Verschlusselement zugewandten Vorsprung des Deckelspiegels oder einer Sicke gebildet, insbesondere in der Offenstellung. Für das Auslenken kann sich der Deckelspiegel, das Betätigungselement und/oder das Verschlusselement elastisch verformen. Dadurch kann auf jeweilige Gelenke zum Bilden des Luftkanals verzichtet werden. Insbesondere kann das Verschlusselement in der Offenstellung an einer radial äußeren Sicke des Deckelspiegels nach unten ausgelenkt werden, wodurch die Dichtwirkung des Verschlusselements mit der Unterseite des Deckelspiegels im ausgelenkten Bereich aufgehoben ist. Das Verschlusselement kann nach unten gekippt werden. Eine rotatorische Auslenkung nach unten, welche auch als Kippen bezeichnet werden kann, erfolgt beispielsweise durch eine Verformung, insbesondere eine elastische Verformung. Das Verschlusselement und/oder die Dichtung wird entlang eines Endbereichs, der von der Ausgussöffnung abgewandt ist, beispielsweise nach unten ausgelenkt. Der Endbereich des Verschlusselements und/oder die Sicke am Deckelspiegel können nach Art einer Rampe zum bereichsweisen Abheben des Verschlusselements vom Deckelspiegel wirken. Der Rand des Verschlusselements kann zumindest Abschnittsweise für ein Abheben abgeschrägt sein, insbesondere in einem Bereich, der von der Ausgussöffnung abgewandt ist. Alternativ oder zusätzlich kann der Deckelspiegel ein oder mehrere in Richtung der Unterseite vorstehende Prägungen aufweisen, die das Verschlusselement in der Offenstellung zumindest abschnittsweise nach unten auslenken, wodurch die Dichtwirkung des Verschlusselements mit der Unterseite des Deckelspiegels im ausgelenkten Bereich aufgehoben ist.

Gemäß einer zweiten Variante wird das zweite Ende des Luftkanals in der Offenstellung dadurch gebildet, dass der Deckelspiegel eine oder mehrere in Richtung der Oberseite vorstehende Prägungen aufweist, wobei die Prägungen in der Offenstellung des Verschlusselements einen Umströmungsweg für die Luft um das Verschlusselement bilden (insbesondere um die Dichtung), wodurch die Dichtwirkung des Verschlusselements mit der Unterseite des Deckelspiegels im Bereich der einen oder mehreren Prägungen aufgehoben ist. Bei dieser Variante kann das Verschlusselement ebenfalls frei von Gelenken für ein Verschwenken des Verschlusselements relativ zum Deckelspiegel sein.

Wird der Dosendeckel entlang einer Achse senkrecht zum Deckelspiegel, d.h. bei üblichen Getränkedosen in Vertikalrichtung, betrachtet, ist das Verschlusselement vorzugsweise so angeordnet, dass es in der Offenstellung mit dem einen oder den mehreren in Richtung der Oberseite und/oder in Richtung der Unterseite vorstehenden Vorsprüngen oder Prägungen oder mit der Sicke des Deckelspiegels überlappt, vorzugsweise in einem hinteren Randbereich. In der Schließstellung überlappt das Verschlusselement die Vorsprünge oder Prägungen bzw. die Sicke nicht. Der hintere Randbereich kann als ein Randbereich definiert sein, der von der Ausgussöffnung abgewandt ist und/oder von der Ausgussöffnung am weitesten entfernt ist.

Der Luftkanal kann zumindest abschnittsweise durch eine Vertiefung des Verschlusselements gebildet sein.

Vorzugsweise bilden der Führungsschlitz und die Ausgussöffnung eine gemeinsame Durchgangsöffnung in dem Deckelspiegel. Die Ausgussöffnung und der Führungsschlitz sind vorzugsweise miteinander verbunden. Der Führungsschlitz weist vorzugsweise eine vordere Öffnung auf, an welcher der Führungsschlitz zur Ausgussöffnung hin offen ist, und erstreckt sich von dort, vorzugsweise gerade, zu einem hinteren Ende. Durch das gemeinsame Ausbilden können der Führungsschlitz und die Ausgussöffnung kostengünstig zusammen gefertigt werden, beispielsweise durch ein einzelnes Stanzen.

Vorzugsweise ist der Führungsschlitz länglich ausgebildet, wobei eine Längsrichtung des Führungsschlitzes einer Verschiebungsrichtung des Verschlusselements entspricht. Die Längsrichtung des Führungsschlitzes kann einer Verstellbewegung des Betätigungselements beim Öffnen und Schließen entsprechen. Der Führungsschlitz ist vorzugsweise gerade und/oder wenigstens teilweise mittig im Deckelspiegel angeordnet. Der Führungsschlitz ist bevorzugt mindestens 0,7 cm, bevorzugter mindestens 1 cm und besonders bevorzugt mindestens 2,5 cm lang. Beispielsweise kann der Führungsschlitz 2,5 cm lang sein. So kann eine große Ausgussöffnung freigegeben werden. Der Führungsschlitz ist vorzugsweise mindestens 2 mm, bevorzugter mindestens 3 mm und besonders bevorzugt mindestens 4 mm breit. Beispielsweise kann der Führungsschlitz 3 mm breit sein. Dadurch kann die Verbindung von Verschlusselement und Betätigungselement ausreichend stabil ausgebildet werden. Der Führungsschlitz kann beispielsweise rechteckig ausgebildet sein.

Das Betätigungselement wirkt vorzugsweise als Tellerfeder, die sich in einem Außenbereich am Deckelspiegel abstützt und so einen Mittenbereich des Betätigungselements, der um die Verbindung vorgesehen ist, vom Deckelspiegel wegdrückt. Hierdurch wird vorzugsweise über die Verbindung das Verschlusselement an die Unterseite des Deckelspiegels gepresst. Der Mittenbereich kann gegenüber dem Außenbereich zurückgesetzt sein. Das Betätigungselement kann sich über den Außenbereich an der Oberseite des Deckelspiegels abstützten, wodurch eine Oberseite des Verschlusselements und/oder eine Oberseite der Dichtung gegen die Unterseite des Deckelspiegels gepresst wird. Diese Abstützung kann durch eine Bombierung verstärkt sein und/oder der Mittenbereich als Bombierung wirken. Die Bombierung kann einer Konkavität entsprechen. Der Bereich der Verbindung selbst wird hierbei vorzugsweise nicht zum Mittenbereich gezählt. Insbesondere wird der Vorsprung, welcher die Verbindung bildet, vorzugsweise nicht zum Mittenbereich gezählt. Der Mittenbereich liegt vorzugsweise nicht am Deckelspiegel an. Das Betätigungselement ist somit von dem Deckelspiegel vorzugsweise nach oben in dem Mittenbereich beabstandet, insbesondere weggewölbt, wodurch der Außenbereich aufgrund der Verbindung mit dem Verschlusselement an den Deckelspiegel angepresst werden kann. So kann auch bei unterschiedlichen Innendrücken eine im Wesentlichen gleiche Betätigungskraft vorgegeben werden.

Vorzugsweise weist der Führungsschlitz an seinem von der Ausgussöffnung abgewandten Ende wenigstens eine oder mehrere Entlastungskerben auf. Das abgewandte Ende kann ein hinteres Ende des Führungsschlitzes sein. Die Entlastungskerben können einen Radius in Ecken von einem ansonsten rechteckigem Querschnitt bilden. Die Entlastungskerben können beispielsweise so ausgestanzt sein, dass dieses Ende keinen rechten Winkel aufweist. Dadurch kann bei hohen Innendrücken ein Einreißen des Deckelspiegels und/oder ein Aufplatzen des Deckels verhindert werden. Jeweilige Entlastungskerben erstrecken sich vorzugsweise im Wesentlichen senkrecht zur Längsrichtung des Verschlusselements. Die jeweiligen Entlastungskerben sind vorzugsweise gekrümmt, wobei ein Mittelpunkt des Krümmungskreises vorzugsweise näher am Mittelpunkt des Deckelspiegels liegt als die Entlastungskerbe. Die jeweiligen Entlastungskerben können beispielsweise bogenförmig ausgebildet sein. Eine Länge der Entlastungskerbe, insbesondere eine Bogenlänge, kann größer als die Breite des Führungsschlitzes sein.

Alternativ oder zusätzlich kann ein Spalt, durch welchen der Griffabschnitt wenigstens bereichsweise von dem Arretierabschnitt getrennt ist, an wenigstens einem Ende eine Entlastungskerbe aufweisen. Diese Entlastungskerbe kann ähnlich oder gleich zu der Entlastungskerbe am Führungsschlitz ausgebildet sein. Auch hier kann ein Einreißen vermieden werden. Zudem kann die Entlastungskerbe eine Materialaufbauschung beim relativen Verschwenken des Griffabschnitts zum Arretierabschnitt vermeiden.

Die Abschnitte des Betätigungselements können einstückig ausgebildet sein und/oder im Wesentlichen flach. Insbesondere kann das Betätigungselement durch ein einzelnes Kunststoffelement gebildet sein. Der Befestigungsabschnitt ist vorzugsweise flach und/oder in Richtung senkrecht zum Deckelspiegel weniger als 4 mm, bevorzugt weniger als 3 mm, dick. Die Oberseite des Befestigungsabschnitts ist vorzugsweise im Wesentlichen eben ausgebildet. Der Befestigungsabschnitt, der Arretierabschnitt und/oder der Griffabschnitt erstreckt sich vorzugsweise wenigstens vor einem erstmaligen Öffnen im Wesentlichen parallel zur Oberseite, insbesondere zu einem Mittenbereich, des Deckelspiegels. Der Befestigungsabschnitt erstreckt sich vorzugsweise auch nach erstmaligem Öffnen im Wesentlichen parallel zur Oberseite des Deckelspiegels, insbesondere auch bei Verschiebung entlang des Führungsschlitzes. Der Griffabschnitt und/oder der Arretierabschnitt ist vorzugsweise an einem der Ausgussöffnung abgewandten Endbereich des Betätigungselements ausgebildet, wodurch dessen Betätigung besonders ergonomisch ist bzw. dessen Arretierung besonders zuverlässig. Zudem ist der Griffabschnitt so besonders gut vor Verunreinigungen durch einen Doseninhalt geschützt.

Vorzugsweise ist ein äußerer Rand des Betätigungselements zumindest abschnittsweise gerundet oder gefast. Dadurch können scharfe Kanten vermieden werden, welche bei einer Betätigung andernfalls für den Nutzer unangenehm sein können. Vorzugsweise ist ein äußerer Rand des Befestigungsabschnitts, des Arretierabschnitts und/oder des Griffabschnitts gerundet oder gefast ausgebildet.

Insbesondere kann die Arretierung durch einen Formschluss und/oder eine Schnappverbindung des Arretierabschnitts mit dem Deckelspiegel gebildet sein. Der Arretierabschnitt ist vorzugsweise zwischen einem von der Ausgussöffnung beabstandeten Ende des Griffabschnitts und dem Befestigungsabschnitt angeordnet.

Vorzugsweise weist der Arretierabschnitt ein von der Unterseite des Betätigungselements nach unten vorstehendes Arretierelement auf. So kann die Arretierung vor Manipulation geschützt sein. Der Arretierabschnitt ist vorzugsweise einstückig mit dem Betätigungselement ausgebildet und damit auch das Arretierelement. Der Arretierabschnitt ist vorzugsweise so ausgebildet, dass ein Aufschieben des Betätigungselements ohne Anheben des Griffabschnitts den Griffabschnitt nach oben drückt, insbesondere aus seiner Ausgangsstellung hinaus, bevorzugt mit einer irreversiblen Verformung. So kann eine zusätzlicher Schutz gegen nicht erkennbares erstmaliges Öffnen bereitgestellt werden.

Vorzugsweise ist das Arretierelement als Haken ausgebildet. Der Haken ist vorzugsweise L-förmig ausgebildet. Der Haken kann einstückig mit dem restlichen Arretierabschnitt ausgebildet sein, insbesondere als Spritzgussteil.

Vorzugsweise ist das Arretierelement vor einem erstmaligen Verstellen aus der Schließstellung in die Offenstellung im Führungsschlitz angeordnet, vorzugsweise an einem von der Ausgussöffnung abgewandten Endbereich des Führungsschlitzes, und greift dort mit dem Deckelspiegel ein. Die Breite des Hakens ist vorzugsweise kleiner als die Breite des Führungsschlitzes an der Stelle des Eingriffs. Eine Dicke des Hakens, beispielsweise gemessen in Richtung der Längsachse des Führungsschlitzes, ist vorzugsweise geringer als die Breite des Hakens.

Vorzugsweise ist das Arretierelement vor einem erstmaligen Verstellen des Betätigungselements aus der Schließstellung in die Offenstellung in einer Vertiefung des Verschlusselements angeordnet. Dadurch kann der Dosendeckel auch mit Arretierelement eine besonders geringe Bauhöhe aufweisen. Die Vertiefung kann auch Teil des bereits beschriebenen Luftkanal sein, wodurch auf eine zusätzliche Vertiefung verzichtet werden kann. Die Vertiefung kann jedoch auch zusätzlich zum Luftkanal ausgebildet sein, wodurch dessen Gestaltung weniger eingeschränkt wird.

Vorzugsweise wirkt der Arretierabschnitt formschlüssig, insbesondere nach Art einer Schnappverbindung, einem Bewegen des Betätigungselements aus der Schließstellung in die Offenstellung entgegen. Insbesondere ein Verstellen des Griffabschnitts aus der Verstaustellung kann ein Lösen der Arretierung bewirken, optional ein dauerhaftes Lösen, etwa durch ein Verformen des Arretierelements des Arretierabschnitts. Die Verformung kann beispielsweise plastisch sein, also bevorzugt dauerhaft. Der Arretierabschnitt ist vorzugsweise dazu ausgebildet, gemeinsam mit dem Griffabschnitt translatorisch entlang des Führungsschlitzes bewegt zu werden.

Der Arretierabschnitt kann dazu ausgebildet sein, nach einem Wiederverschließen des Verschlusses erneut an dem Deckelspiegel zu arretieren. So kann weiterhin ein ungewolltes Öffnen verhindert werden. Beispielsweise kann das Arretierelement wieder an dem Deckelspiegel einrasten, wenn das Betätigungselement erneut in die Schließstellung und/oder der Griffabschnitt in die Verstaustellung verstellt wird. Eine nicht oder nur geringfügig plastische Verformung bietet den Vorteil, dass das Arretierelement nach einem Wiederverschließen des Verschlusselements als zusätzliche Sicherung gegen unbeabsichtigtes Öffnen fest mit dem Führungsschlitz eingerastet werden kann.

Vorzugsweise rahmt der Griffabschnitt, insbesondere in seiner Verstaustellung, den Arretierabschnitt wenigstens teilweise ein. Dadurch ist das Betätigungselement besonders ergonomisch, da intuitiv der Griffabschnitt gegriffen wird und nicht der Arretierabschnitt.

Vorzugsweise bildet der Griffabschnitt in seiner Betätigungsstellung einen von der Oberseite des Dosendeckels vorstehenden Bügel aus. Ein Solcher Bügel ist besonders einfach zu greifen und erlaubt hohe Betätigungskräfte zum Verschieben des Verschlusselements.

Vorzugsweise sind der Befestigungsabschnitt und der Arretierabschnitt einstückig ausgebildet und/oder sind der Befestigungsabschnitt und der Griffabschnitt einstückig ausgebildet und/oder sind der Arretierabschnitt und der Griffabschnitt einstückig ausgebildet. Vorzugsweise ist das gesamte Betätigungselement einstückig ausgebildet ist. Insbesondere kann der Arretierabschnitt mit Arretierelement, der Griffabschnitt und der Befestigungsabschnitt einstückig durch Spritzguss hergestellt sein. Jeweilige Dichtungen können integral verbunden sein und gemeinsam in einem Spritzgussprozess hergestellt sein.

Vorzugsweise weist das Verschlusselement wenigstens einen Stützabschnitt auf. Der Stützabschnitt kann an der Unterseite des Deckelspiegels in wenigsten einem Bereich anliegen, welcher der Position des erstens Gelenks und/oder des zweiten Gelenks entspricht. Vorzugsweise ist der Stützabschnitt nicht durch die Dichtung gebildet und/oder ist aus einem härteren Material als die Dichtung ausgebildet. Es kann also eine Überlappung des Stützabschnitts mit einem oder beiden Gelenken in Vertikalrichtung vorliegen. Der Stützbereich kann beispielsweise ein Bereich sein, welcher frei von Vertiefungen, insbesondere für den Luftkanal, ist. Der Stützbereich kann an dem Deckelspiegel anliegen. Durch den Stützbereich kann eine ungewollte Verformung des Deckelspiegels und/oder dessen Überlastung beim Hochklappen des Griffabschnitts vermieden werden. Zudem kann das Hochklappen erleichtert werden. Ein Stützbereich ist vorzugsweise, alternativ oder zusätzlich, in einem Endbereich des Gelenks in Richtung der Gelenkachse vorgesehen, da dort der Deckelspiegel besonders belastet wird. Der Stützbereich kann dort das Gelenk und auch den Deckelspiegel stützen. Vorzugsweise sind zwei Stützabschnitte vorgesehen, je einer pro Endbereich. Vorzugsweise verläuft der Luftkanal zwischen diesen beiden Stützabschnitten. Alternativ kann der Luftkanal beispielsweise auch außerhalb der Stützabschnitte verlaufen.

Vorzugsweise weist das Verschlusselement wenigstens einen randseitigen Vorsprung, bevorzugt zwei randseitige Vorsprünge, auf, mit welchem das Verschlusselement in der Schließstellung an dem Deckelspiegel anliegt, insbesondere an einer Sicke des Deckelspiegels. Jeweilige randseitige Vorsprünge erleichtern eine Orientierung des Verschlusselements bei der Montage, insbesondere vor dem Verschweißen mit dem Betätigungselement. Das Verschlusselement kann aufgrund des randseitigen Vorsprungs beispielsweise als Schüttgut zugeführt und automatisch mechanisch ausgerichtet werden. Zudem können die randseitigen Vorsprünge als Zentrierung und Verdrehsicherung dienen und eine Bewegung des Verschlusselements über die Schließstellung beim Wiederverschließen des Dosendeckels verhindern. Der oder die randseitigen Vorsprünge stehen vorzugsweise entgegen der Verschiebungsrichtung des Verschlusselements vom Verschlusselement vor.

Vorzugsweise weist das Verschlusselement wenigstens einen randseitigen Vorsprung auf, mit welchem das Verschlusselement in der Offenstellung an dem Deckelspiegel anliegt, insbesondere an einer Sicke des Deckelspiegels. Auch dieser randseitige Vorsprung kann eine Ausrichtung vereinfachen und zusätzlich abstützen. Dieser randseitige Vorsprung kann vorzugsweise in Verschiebungsrichtung des Verschlusselements vom Verschlusselement vorstehen. Optional kann dieser randseitige Vorsprung in der Offenstellung unter die Sicke geschoben werden und/oder mit der Sicke überlappen, vorzugsweise wobei der randseitige Vorsprung das Verschlusselement nach unten vom Deckelspiegel wegdrückt. Dadurch kann dieser randseitige Vorsprung zusätzlich eine Art Rampe zum Freigeben des bereits beschriebenen Luftkanals bilden.

Ein zweiter Aspekt betrifft eine Dose. Vorzugsweise ist die Dose als Getränkedose und/oder als Aufbewahrungsbehälter für Schüttgut ausgebildet. Die Dose weist wenigstens einen Dosendeckel gemäß dem ersten Aspekt auf. Der Deckelspiegel und auch der Dosendeckel kann eine Oberseite der Dose begrenzen und schließt dort deren Innenraum ab, insbesondere durch Bördeln eines äußeren umlaufenden Rands des Deckelspiegels mit einer seitlichen Wand der Dose. Die Dose kann einen Dosenkörper aufweisen, welcher beispielsweise einstückig in einem Tiefziehverfahren hergestellt wird und mit dem Dosendeckel nach Befüllen der Dose verbunden wird. Der Dosenkörper kann oberseitig offen sein und/oder eine Durchgangsöffnung aufweisen. Diese kann von dem Deckelelement verschlossen sein. Die Dose ist bevorzugt zylindrisch ausgebildet und/oder mit einem in Richtung des Innenraums gewölbten Boden.

Ein dritter Aspekt , der nicht Teil der Erfindung ist, betrifft ein Verfahren zum Herstellen eines Dosendeckels für eine Dose.

Vorzugsweise ist die Dose als Getränkedose und/oder als Aufbewahrungsbehälter für Schüttgut ausgebildet. Das Verfahren ist vorzugsweise zur Herstellung eines Dosendeckels gemäß dem ersten Aspekt ausgebildet. Das Verfahren kann einen oder mehrere der folgenden Schritte aufweisen:
- Bereitstellen eines Deckelspiegels, welcher dazu ausgebildet ist, eine Oberseite der Dose zu begrenzen, insbesondere durch Bördeln eines äußeren umlaufenden Rands des Deckelspiegels mit einer seitlichen Wand der Dose, wobei der Deckelspiegel wenigstens eine Ausgussöffnung, durch welche ein in der Dose befindlicher Stoff ausgeschüttet werden kann, und einen Führungsschlitz aufweist;
- Bereitstellen eines Betätigungselements, insbesondere als Spritzgussteil, und eines Verschlusselements, insbesondere als Spritzgussteil, vorzugsweise wobei das Betätigungselement und/oder das Verschlusselement jeweils aus Kunststoff gebildet sind; und/oder
- Anordnen des Verschlusselements an einer Unterseite des Deckelspiegels, welche einem Innenraum der Dose bei daran angebrachtem Dosendeckel zugewandt ist; und/oder
- Anordnen des Betätigungselements an einer Oberseite des Deckelspiegels, welche einem Innenraum der Dose bei daran angebrachtem Dosendeckel abgewandt ist; und/oder
- Befestigen des Verschlusselements und des Betätigungselements mittels einer Verbindung, insbesondere einer Schweißverbindung, bevorzugt einer Ultraschallschweißverbindung, besonders bevorzugt einer einzigen Ultraschallschweißverbindung, miteinander, wobei die Verbindung entlang des Führungsschlitzes bewegbar ist.

Das Verschlusselement kann mittels des Betätigungselements zwischen einer Schließstellung, in welcher das Verschlusselement die Ausgussöffnung fluiddicht und/oder gasdicht verschließt, und einer Offenstellung, in welcher das Verschlusselement die Ausgussöffnung wenigstens teilweise freigibt, im Wesentlichen translatorisch entlang des Deckelspiegels geführt verschoben werden.

Das Betätigungselement weist bevorzugt einen Befestigungsabschnitt, welcher die Verbindung mit dem Verschlusselement aufweist, einen Arretierabschnitt, mittels welchem das Betätigungselement wenigstens vor einem erstmaligen Verstellen aus der Schließstellung in die Offenstellung an dem Deckelspiegel in der Schließstellung arretiert ist, und einen Griffabschnitt, welcher zum Greifen Zwecks der Verstellung zwischen der Offenstellung und der Schließstellung ausgebildet ist, auf. Der Befestigungsabschnitt kann mit dem Griffabschnitt mittels eines ersten Gelenks mit einer ersten Gelenkachse verbunden sein und der Arretierabschnitt kann mit dem Griffabschnitt mittels eines zweiten Gelenks mit einer zweiten Gelenkachse verbunden sein.

Das Bereitstellen des Deckelspiegels weist vorzugsweise den folgenden Schritt auf:
- Einbringen, insbesondere Stanzen oder Ausschneiden, der Ausgussöffnung und/oder des Führungsschlitzes, insbesondere als gemeinsame Durchgangsöffnung;
sowie optional einen oder mehrere der folgenden Schritte:
- Einbringen von Prägungen, die in der Offenstellung ein Freigeben eines Luftkanals des Verschlusselements bewirken; und/oder
- Einbringen, insbesondere Stanzen oder Ausschneiden, einer zusätzlichen Druckausgleichöffnung, welche von der Ausgussöffnung beabstandet ist und beim Verstellen von der Schließstellung in die Offenstellung zuerst freigegeben wird; und/oder
- Einbringen, insbesondere Stanzen oder Ausschneiden, einer Kerbe oder Prägung in einem Teilbereich, welcher einem Teilbereich der Ausgussöffnung, der beim Verstellen des Verschlusselements von der Schließstellung in die Offenstellung zuerst freigegeben wird, benachbart angeordnet ist und/oder diesen Teilbereich begrenzt; und/oder
- Einbringen, insbesondere Stanzen oder Ausschneiden, einer Entlastungskerbe an einem von der Ausgussöffnung abgewandten Ende des Führungsschlitzes.

Vorzugsweise wird das Verschlusselement als Schüttgut bereitgestellt und mittels eines randseitigen Vorsprungs in einer Herstellungsanlage geführt, vorzugsweise mittels mindestens zwei randseitigen Vorsprüngen, und/oder das Betätigungselement als Schüttgut bereitgestellt und mittels mindestens einem Vorsprung, vorzugsweise mittels mindestens zwei Vorsprüngen, in der Anlage geführt. Die Vorsprünge des Betätigungselements werden bevorzugt vor der Verbindung mit dem Verschlusselement abgetrennt und/oder stehen unterseitig und/oder randseitig vor. Das Bereitstellen als Schüttgut erlaubt einen besonders kostengünstigen Herstellungsprozess und auch ein kostengünstiges Transportieren und Lagern jeweiliger Verschlusselemente und/oder Betätigungselemente vor dem Weiterverarbeiten zum Erzeugen des Dosendeckels.

Ein vierter Aspekt, der nicht Teil der Erfindung ist, betrifft ein Verfahren zum Herstellen einer Dose, insbesondere einer Dose gemäß dem zweiten Aspekt. Vorzugsweise weist das Verfahren die Schritte zum Herstellen eines Dosendeckels gemäß dem Verfahren nach dem dritten Aspekt auf. Das Verfahren gemäß dem vierten Aspekt weist wenigstens die folgenden Schritte auf:
- Bereitstellen eines Dosendeckels gemäß dem ersten Aspekt, wobei der Dosendeckel mit dem Verfahren gemäß dem dritten Aspekt hergestellt worden sein kann;
- Verbinden des Dosendeckels mit einem Dosenkörper, insbesondere durch Bördeln eines äußeren umlaufenden Rands des Deckelspiegels mit einer seitlichen Wand des Dosenkörpers.

Weitere Vorteile, Merkmale und Einzelheiten der Erfindung ergeben sich aus der nachfolgenden Beschreibung bevorzugter Ausführungsbeispiele sowie anhand der Zeichnungen. Die Figuren sollen den Schutzumfang der Ansprüche nicht beschränken.

Dabei zeigen:
- Fig. 1: in einer schematischen Perspektivansicht eine Dose mit einem Dosendeckel in seiner Schließstellung;
- Fig. 2: in einer Oberansicht die Dose gemäß Fig. 1;
- Fig. 3: in einer Unteransicht den Dosendeckel gemäß Fig. 1;
- Fig. 4a-4d: in verschiedenen Ansichten den Dosendeckel gemäß Fig. 1 ebenfalls in seiner Schließstellung;
- Fig. 5a-5f: in verschiedenen Ansichten den Dosendeckel gemäß Fig. 1 in seiner Offenstellung;
- Fig. 6a-6d: in verschiedenen Ansichten den Dosendeckel gemäß Fig. 1, wobei ein Griffabschnitt eines Betätigungselements in einer Betätigungsstellung gezeigt ist und ein Arretierabschnitt des Betätigungselements in einer Arretierstellung;
- Fig. 7a-7d: in verschiedenen Ansichten den Dosendeckel gemäß Fig. 1, wobei ein Griffabschnitt eines Betätigungselements in einer weiteren Betätigungsstellung gezeigt ist und ein Arretierabschnitt des Betätigungselements in einer Freigabestellung;
- Fig. 8a-8e: in Schnittansichten, wie der Dosendeckel gemäß Fig. 1 geöffnet wird;
- Fig. 9a-9f: in verschiedenen Ansichten das Betätigungselement des Dosendeckels gemäß Fig. 1;
- Fig. 10: in einer Unteransicht den Dosendeckel gemäß Fig. 1 ohne einen Deckelspiegel;
- Fig. 11: in einer Unteransicht ein Betätigungselement des Dosendeckels gemäß Fig. 1;
- Fig. 12: in einer Explosionsansicht den Dosendeckel gemäß Fig. 1;
- Fig. 13a: in einer schematischen Draufsicht einen Deckelspiegel für den Dosendeckel gemäß Fig. 1;
- Fig. 13b: in einer schematischen Draufsicht eine Variante des Deckelspiegels von Fig. 13a;
- Fig. 13c: in einer schematischen Draufsicht eine weitere Variante des Deckelspiegels von Fig. 13a;
- Fig. 14: in einer schematischen Schnittansicht eine mögliche Gestaltung einer Dichtung des Dosendeckels gemäß Fig. 1;
- Fig. 15: einen weitere Gestaltung eines Deckels zur Verwendung mit dem Verschlusssystem; und
- Fig. 16: ebenfalls einen weitere Gestaltung eines Deckels zur Verwendung mit dem Verschlusssystem.

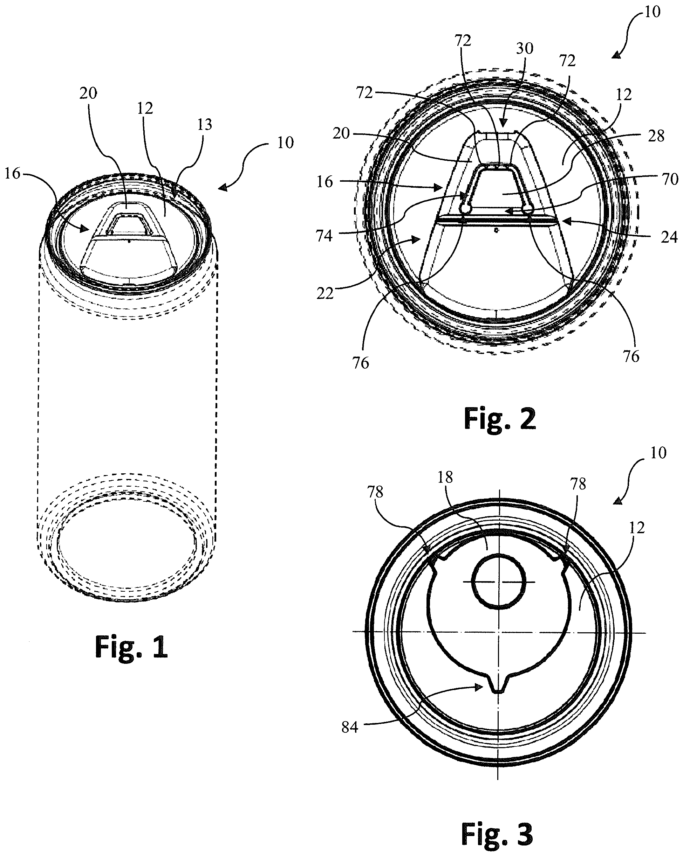

Fig. 1 zeigt in einer schematischen Perspektivansicht eine gestrichelt dargestellte Dose mit einem wiederverschließbaren Dosendeckel 10 von oben. Der Dosendeckel 10 weist einen Deckelspiegel 12 auf, welcher die Dose oberseitig abschließt. Eine Hochrichtung des Dosendeckels 10 kann durch eine stehende Dose definiert sein. Die Oberseite jeweiliger Teile des Dosendeckels 10 sind bezüglich einer einem Innenraum der Dose abgewandten Seite definiert. Jeweilige Unterseiten sind einem Innenraum der Dose zugewandt. Die Begriffe "oben" und "unten" bzw. "Oberseite" und "Unterseite" beziehen sich auf die übliche Anordnung des Deckels an einer Dose. Selbstverständlich können die erfindungsgemäßen Dosendeckel jedoch bei Bedarf auch anders ausgerichtet bzw. an einer Dose angebracht werden.

Der Dosendeckel 10 ist ein runder flacher Körper und weist radial außenseitig eine umlaufende Sicke 13 zur Verstärkung auf. An seinem äußeren umlaufenden Rand ist der Deckelspiegel 12 mit dem Dosenkörper zur Verbindung und damit Herstellung der abgeschlossenen Dose gebördelt. Der Deckelspiegel 12 kann äußere Abmaße und Materialien aufweisen, welche einem herkömmlichen Deckelspiegel für Getränkedosen entsprechen. Vorliegend ist der Deckelspiegel 12 beispielsweise aus einem metallischen Werkstoff wie Weißblech oder Aluminiumblech gebildet und wurde in einem Tiefzieh- und/oder Stanzprozess hergestellt. An seiner Oberseite und seiner Unterseite ist der Deckelspiegel 12 zusätzlich mit Kunststoff beschichtet.

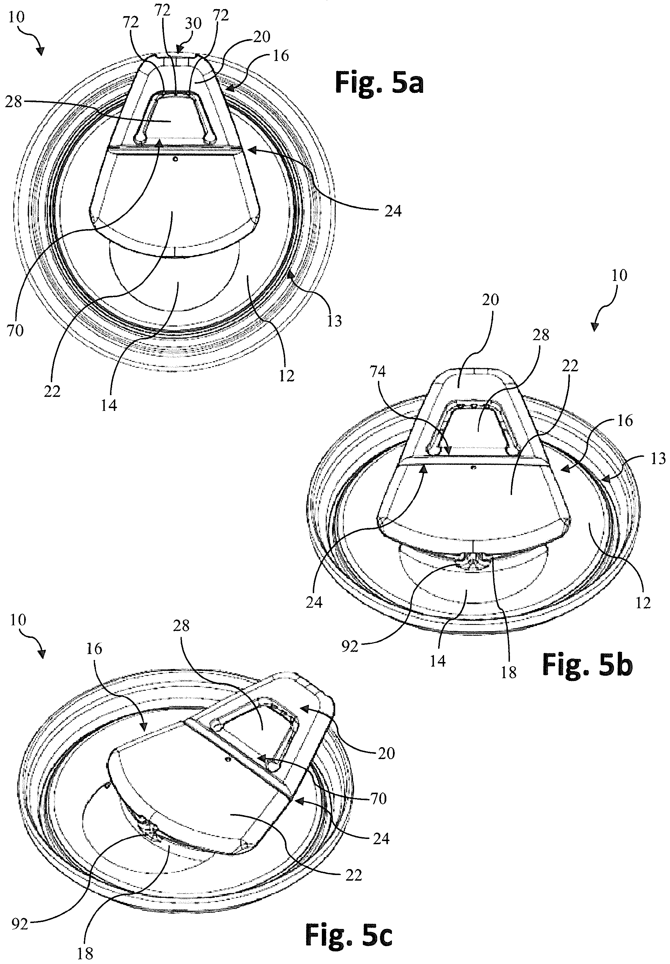

Der Deckelspiegel 12 weist zudem eine Ausgussöffnung 14 auf, welche beispielsweise in Fig. 5a bis 5f zu erkennen ist. Die Ausgussöffnung 14 ist z.B. teilweise oval ausgebildet. Durch die Ausgussöffnung kann bei geöffnetem Dosendeckel 10 ein Inhalt der Dose, wie ein Getränk, ausgeschüttet werden.

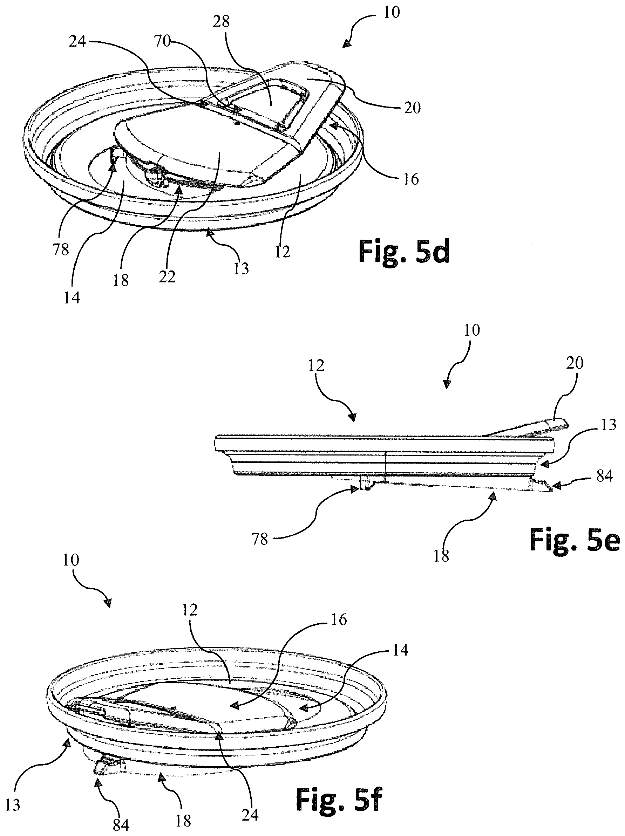

Die Figuren, welche durch Buchstaben gekennzeichnet sind, zeigen entweder unterschiedliche Ansichten eines Zustands des Dosendeckels 10 oder unterschiedliche Ausführungsformen. Sofern alle Ausführungsformen gemeint sind oder alle Ansichten wird der Einfachheit halber lediglich von der Figur mit der Nummer gesprochen. Beispielsweise sind mit der Fig. 5 alle Fig. 5a bis 5f gemeint.

Weiterhin weist der Dosendeckel 10 ein Betätigungselement 16 auf, welches oberseitig an dem Deckelspiegel 12 angeordnet ist. Der Dosendeckel 10 weist ein Verschlusselement 18 auf, welches unterseitig an dem Deckelspiegel 12 angeordnet ist. Das Verschlusselement 18 ist beispielsweise in Fig. 3 zu erkennen. Das Verschlusselement 18 ist translatorisch und im Wesentlichen frei von einer Rotation zwischen einer Schließstellung und einer Offenstellung bewegbar, wobei diese Stellungen zu einem geschlossenen bzw. geöffneten Dosendeckel 10 korrespondieren. In seiner Schließstellung verschließt das Verschlusselement 18 die Ausgussöffnung 14 gas- und flüssigkeitsdicht. Insbesondere deckt das Verschlusselement 18 die Ausgussöffnung 14 in der Schließstellung ab und dichtet diese so von innen gegenüber dem Innenraum der Dose ab. In seiner Offenstellung gibt das Verschlusselement 18 die Ausgussöffnung 14 wenigstens teilweise frei.

Vorliegend ist das Betätigungselement 16 und das Verschlusselement 18 jeweils aus einem Kunststoff gebildet. Beispielsweise kann das Betätigungselement 16 und das Verschlusselement 18 aus dem gleichen Werkstoff gebildet sein. Vorzugsweise sind das Betätigungselement 16 und das Verschlusselement 18 jeweils ein Spritzgusselement. Das Betätigungselement 16 und das Verschlusselement 18 sind jeweils einstückig ausgebildet.

Das Betätigungselement 16 ist mit dem Verschlusselement 18 verbunden. Durch eine Bewegung des Betätigungselements 16 kann das Verschlusselement 18 deshalb zwischen der Schließstellung und der Offenstellung bewegt werden, insbesondere geführt. Eine Führungsart wird im Folgenden noch beispielhaft beschrieben. Bevorzugt ist die Verbindung als Ultraschallschweißverbindung ausgebildet.

Das Betätigungselement 16 weist einen Griffabschnitt 20 und einen Befestigungsabschnitt 22 auf, welche mittels eines ersten Filmscharniers 24 als erstes Gelenk verbunden sind. Das erste Filmscharnier 24 ist dabei als Einkerbung in der Oberseite des Betätigungselements 16 ausgebildet, welche von oben in das Betätigungselement hinein verläuft. An einem oberseitigen Ende ist die Einkerbung also aufgeweitet und verjüngt sich hin zu der Unterseite. Das Filmscharnier 24 erlaubt eine Rotation des Griffabschnitts 20 relativ zu dem Befestigungsabschnitt 22 um dessen Gelenkachse, welche der Längserstreckung des Filmscharniers 24 entspricht. Das Filmscharnier 24 gibt also eine bevorzugte Rotationsrichtung vor. Bei dem Verschwenken nach oben begrenzen jeweilige Wandungen der Einkerbungen den maximalen Schwenkwinkel, bei welchem diese jeweiligen Wandungen aneinander wenigstens teilweise anliegen.

In Fig. 2 ist in einer schematischen Perspektivansicht gezeigt, wie der Griffabschnitt 20 teilweise aus seiner Ausgangsstellung, gezeigt in Fig. 1, relativ zu dem Befestigungsabschnitt 22 nach oben rotiert wurde. Der Griffabschnitt 20 weist an seinem dem Befestigungsabschnitt 22 abgewandten Ende einen Bereich 30 mit geringerer Dicke auf. Dadurch kann der Griffabschnitt 20 besonders leicht von seiner Ausgangsstellung angehoben werden, beispielsweise mit einem Fingernagel. In der Ausgangsstellung (Fig. 1) erstreckt sich der Griffabschnitt im Wesentlichen parallel zu dem Deckelspiegel 12 und liegt an diesem im Wesentlichen flach an.

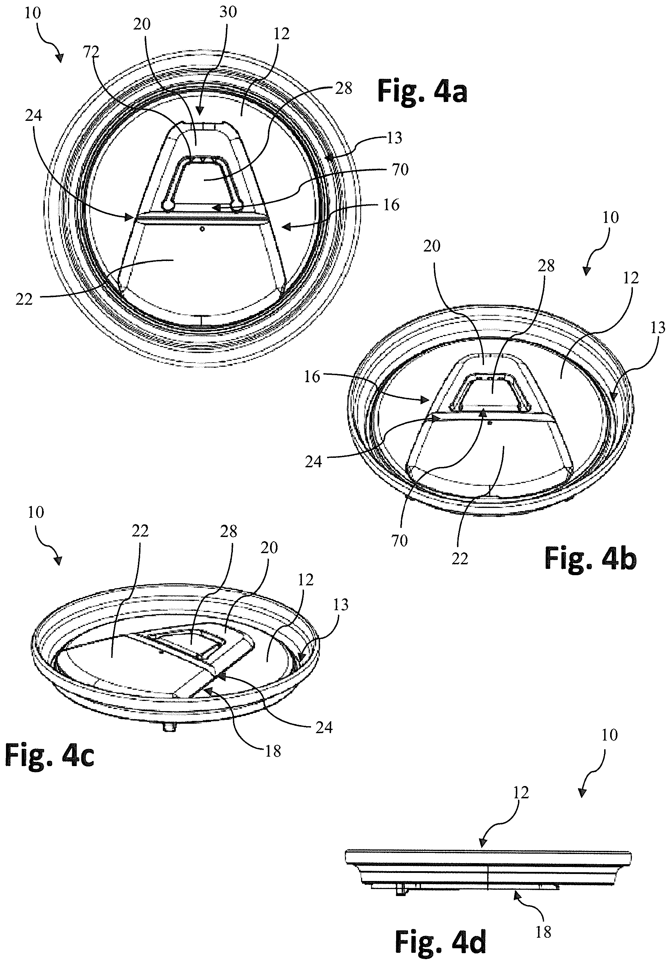

Fig. 4 veranschaulicht den Griffabschnitt 20 in einer Ausgangsstellung, bei welcher sich dieser im Wesentlichen flach in einer Ebene parallel zu dem Deckelspiegel 12 mit dem Befestigungsabschnitt 22 erstreckt.

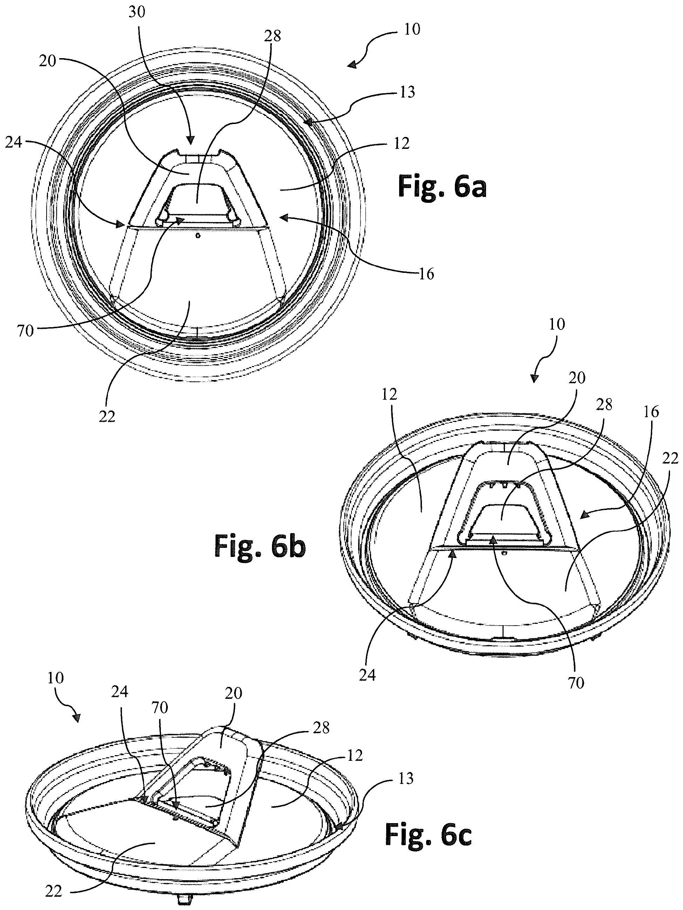

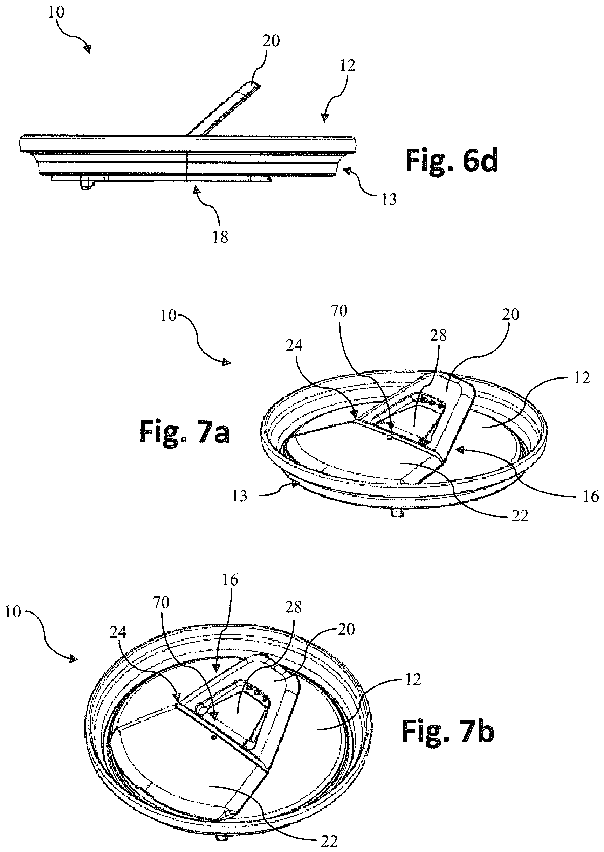

Fig. 6 veranschaulicht in einer schematischen Perspektivansicht eine Betätigungsstellung des Griffabschnitts 20. In dieser Stellung ist der Griffabschnitt 20 weit nach oben rotiert, beispielsweise mindestens 60° oder mindestens 80° gegenüber einer durch den Befestigungsabschnitt 22 und/oder den Deckelspiegel 12 definierten Ebene. Dadurch kann der Griffabschnitt 20 besonders einfach zum Verschieben des Verschlusselements 18 gegriffen werden, beispielsweise mit zwei Fingern. In einem Mittenbereich weist der Griffabschnitt 20 zudem eine Aussparung auf, welche einem Finger (insbesondere dem Daumen) beim Verstellen zusätzlichen Halt bieten kann.

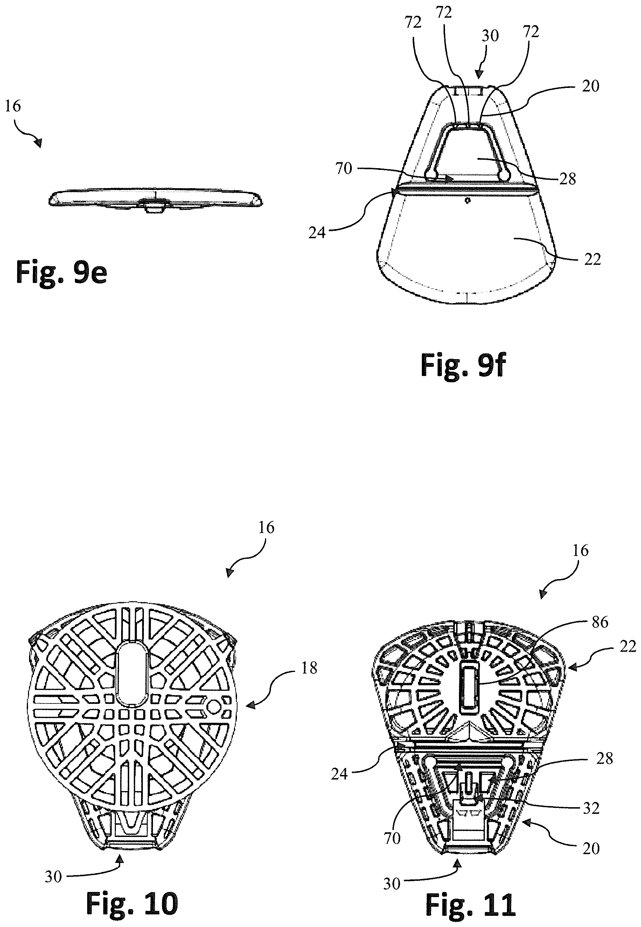

In diesem Mittenbereich ist ein Arretierabschnitt 28 zumindest in der Ausgangsstellung angeordnet ist. Das Betätigungselement 16 weist den Arretierabschnitt 28 auf. Dieser Arretierabschnitt wird vorzugsweise ebenfalls einstückig mit dem restlichen Betätigungselement 16 in einem Spritzgussprozess geformt. Der Arretierabschnitt 28 ist mit dem Griffabschnitt 20 über ein zweites Filmscharnier 70 als zweites Gelenk verbunden. Das zweite Filmscharnier 70 ist dabei als Einkerbung in der Unterseite des Betätigungselements 16 ausgebildet (siehe Fig. 11), welche von unten in das Betätigungselement hinein verläuft. An einem unterseitigen Ende ist die Einkerbung also aufgeweitet und verjüngt sich hin zu der Oberseite. Das zweite Filmscharnier 70 erlaubt eine Rotation des Arretierabschnitts 28 relativ zu dem Griffabschnitt 20 um dessen Gelenkachse, welche der Längserstreckung des zweiten Filmscharniers 70 entspricht. Ein Verschwenken des Arretierabschnitts 28 nach unten ist dabei leichter als ein Verschwenken nach oben, welchem das zweite Filmscharnier 70 entgegenwirkt und gegebenenfalls eine plastische Verformung erfordert. Das zweite Filmscharnier 70 gibt also eine bevorzugte Rotationsrichtung vor.

Der Arretierabschnitt 28 ist von dem Griffabschnitt 20 außerhalb des zweiten Filmscharniers 70 durch einen Spalt 74 getrennt. An seinen beiden Enden weist der Spalt 74 vorzugsweise gerundete Entlastungskerben 76 auf, welche ein Einreißen des Betätigungselements 16 bei Belastung des Arretierabschnitts 28 und/oder des Griffabschnitts 20 vermeiden.

Der Arretierabschnitt 28 ist zusätzlich mit dem Griffabschnitt 20 mittels beispielsweise dreier Stegelemente 72 verbunden. Die Stegelemente sind beispielsweise gemeinsam mit dem restlichen Betätigungselement 16 gemeinsam in einem Spritzgussprozess gefertigt. Die Stegelemente 72 sind dabei dazu ausgebildet, bei einem erstmaligen Verstellen des Dosendeckels 10 aus der Schließstellung in die Offenstellung zu brechen. Die Stegelemente 72 bilden so ein Originalitätsmerkmal des Dosendeckels 10, welches einem Nutzer optisch anzeigt, ob der Dosendeckel 10 bereits erstmalig geöffnet war oder nicht. Das Brechen der Stegelemente 72 kann auch ein akustisches Signal erzeugen.

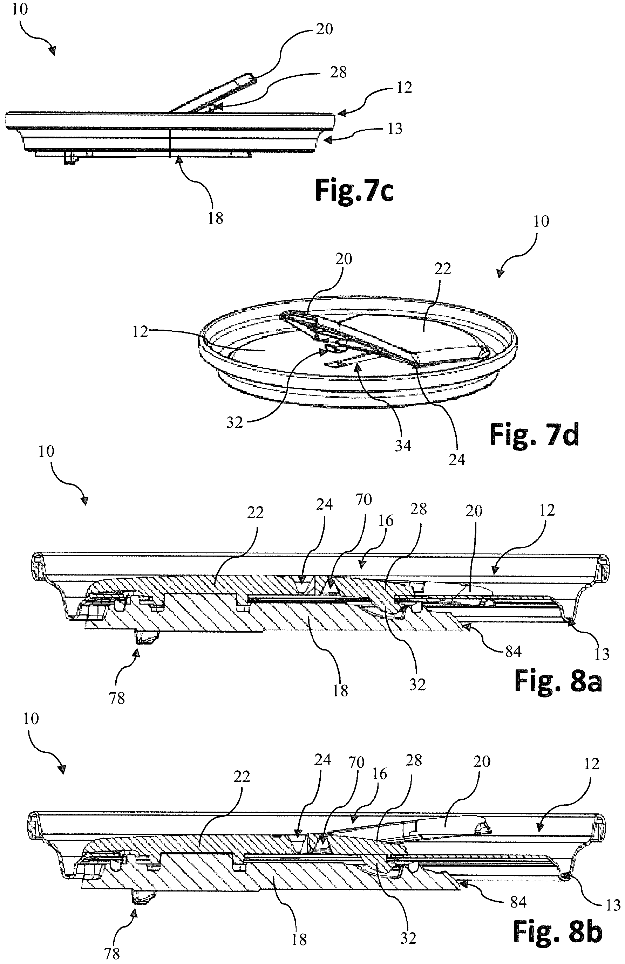

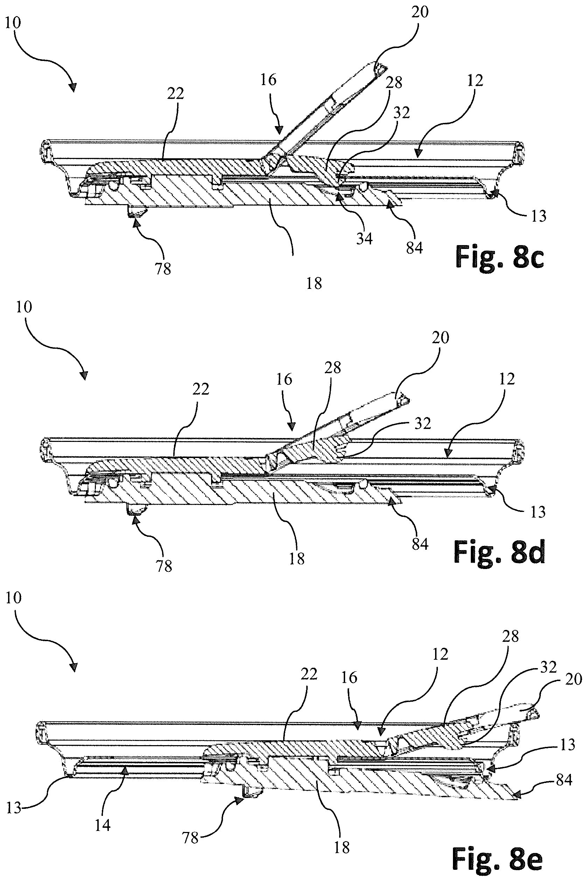

Der Arretierabschnitt 28 weist ein Arretierelement 32 auf, welches unterseitig vorsteht (siehe beispielsweise Fig. 7d, Fig. 8, Fig. 9 und Fig. 11). Vorliegend ist das Arretierelement 32 als Haken ausgebildet, was besonders gut in der Seitenansicht von Fig. 7d und den Schnittansichten gemäß Fig. 8 zu erkennen ist. Das Arretierelement 32 erstreckt sich in der Ausgangsstellung in eine korrespondierende Vertiefung 34 des Verschlusselements 18, wodurch der Arretierabschnitt 28 flach anliegen kann und der Haken den Deckelspiegel 12 hintergreifen kann. Der Arretierabschnitt 28 und damit auch der Griffabschnitt 20 sind so in der Ausgangsstellung arretiert. Diese Arretierung kann insbesondere ein Brechen der Stegelemente 72 beim erstmaligen Anheben des Griffabschnitts 20 bewirken, da die Arretierung den Arretierabschnitt 28 entgegen einer über das zweite Filmscharnier 70 wirkenden Kraft am Deckelspiegel 12 hält.

Die Stegelemente 72 können auch brechen, wenn das Betätigungselement 16 ohne Anheben des Griffabschnitts 20 in Richtung der Offenstellung verschoben wird, beispielsweise bei einem Manipulationsversuch. Der Arretierabschnitt 28 bleibt dabei durch den Eingriff mit dem Deckelspiegel 12 in Position und drückt so das Betätigungselement 16 im Bereich des zweiten Filmscharniers 70 nach oben. Dadurch wird der Griffabschnitt 20 zumindest im Bereich der Stegelemente 72 von dem Arretierabschnitt 28 abgehoben, wodurch die Stegelemente 72 brechen. So wird ein zusätzlicher Manipulationsschutz des Dosendeckels 10 bereitgestellt.

Beim Anheben des Griffabschnitts 20 über einen bestimmten Winkel hinaus löst sich das Arretierelement 32 von dem Deckelspiegel 12. Insbesondere kommt es durch das Anheben des Griffabschnitts 20 zu einer Verlagerung des zweiten Gelenks 70 zur Ausgussöffnung 14 hin, wodurch das Arretierelement 32 in Richtung der Ausgussöffnung 14 gezogen wird, sodass der Eingriff mit dem Deckelspiegel 12 aufgehoben wird. Dadurch kann die Arretierung aufgehoben werden und der Dosendeckel 12 geöffnet werden. Insbesondere kann der Haken 32 vom Ende des Führungsschlitzes 34 weggezogen werden.

Nach dem erstmaligen Lösen der Arretierung kann eine plastische Verformung des Arretierelements 32 ein erneutes Arretieren verhindern. Das Lösen des Arretierelements 32 kann ein Geräusch verursachen, welches für den Benutzer zudem als Signal wahrnehmbar ist. Das Arretierelement 32 kann sich in einer anderen Ausführungsform beim erstmaligen Öffnen der Dose nicht oder im Wesentlichen elastisch verformen. Dadurch kann das Arretierelement 32 beim Rückverstellen des Griffabschnitts 20 erneut an dem Deckelspiegel arretieren, beispielsweise nach Art eines Einrastens und/oder einer Schnappverbindung. Damit kann eine Transportsicherung auch nach erstmaligem Öffnen bereitgestellt werden. Diese erneute Arretierung kann ebenfalls ein Geräusch verursachen, welches dem Benutzer die erneute Arretierung signalisiert.

In der gezeigten Ausführungsform ist das Betätigungselement 16 vorzugsweise so ausgebildet, dass es sich nach einem erstmaligen Bewegen des Griffabschnitts 20 aus seiner Ausgangsstellung verformt. Dies kann ein Rückverstellen des Griffabschnitts 20 in die Ausgangsstellung verhindern und/oder ein erstmaliges Öffnen kenntlich machen. Beispielsweise kann sich das erste und/oder das zweite Filmscharnier 24, 70 so verformen und/oder an einem äußeren Rand einreißen, dass der Griffabschnitt 20 nicht mehr in der Ausgangsstellung verbleibt und/oder die Verformung und/oder der Riss für einen Benutzer erkennbar ist. Beispielsweise kann der Griffabschnitt so gestaltet sein, dass er nach erstmaligem Öffnen nur noch in eine Zwischenstellung zurückkehrt. Vorteilhafterweise wird ein Rückverbiegen des Griffabschnitts 20 zudem dadurch verhindert, dass eine Rotation nach unten über den Deckelspiegel 12 hinaus notwendig wäre, um die plastische Verformung rückgängig zu machen, aber durch den Deckelspiegel 12 aufgrund der Befestigung des Betätigungselements 16 daran blockiert wird. Zudem kann sich eine Oberfläche eines Kunststoffs bei einer plastischen Verformung optisch irreversibel verändern, beispielsweise deren Farbe.

In Fig. 5 ist zu erkennen, dass der Griffabschnitt 20 in der Offenstellung des Dosendeckels 10 an einem nach oben vorstehenden Rand des Deckelspiegels 12 aufliegt und/oder über den Rand hinaussteht. Dadurch ist der Griffabschnitt 20 besonders einfach für eine Verschließen der Dose zu betätigen. Der Arretierabschnitt 28 kann dabei ebenfalls dort aufliegen, wie gezeigt.

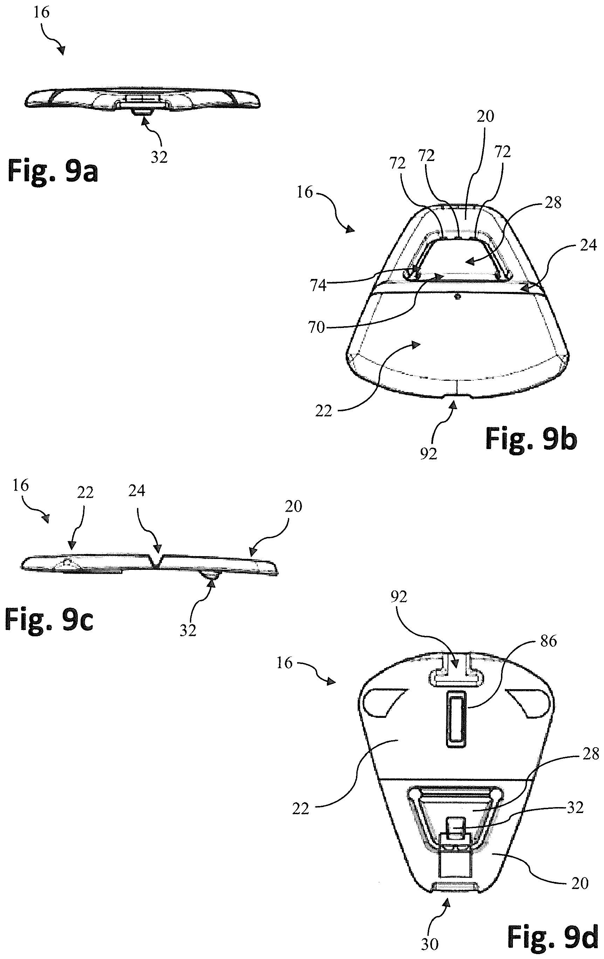

In Fig. 9 ist zu erkennen, dass das Betätigungselement 16 in einem Übergang von seiner Oberseite zu einem äußeren Rand wenigstens bereichsweise gerundet ausgebildet ist. Diese Rundung kann beispielsweise ein unangenehmes Gefühl beim Greifen des Betätigungselements vermeiden. Auch ein Einklemmrisiko beim Verstellen des Betätigungselements 16 kann so reduziert werden.

Ein Verstellen des Betätigungselements 16 und damit auch des Verschlusselements 18 kann durch ein Ziehen und/oder Drücken an dem Griffabschnitt in einer Richtung im Wesentlichen orthogonal zu dem aufgestellten Griffabschnitt 20 entlang dem Deckelspiegel 12 erfolgen.

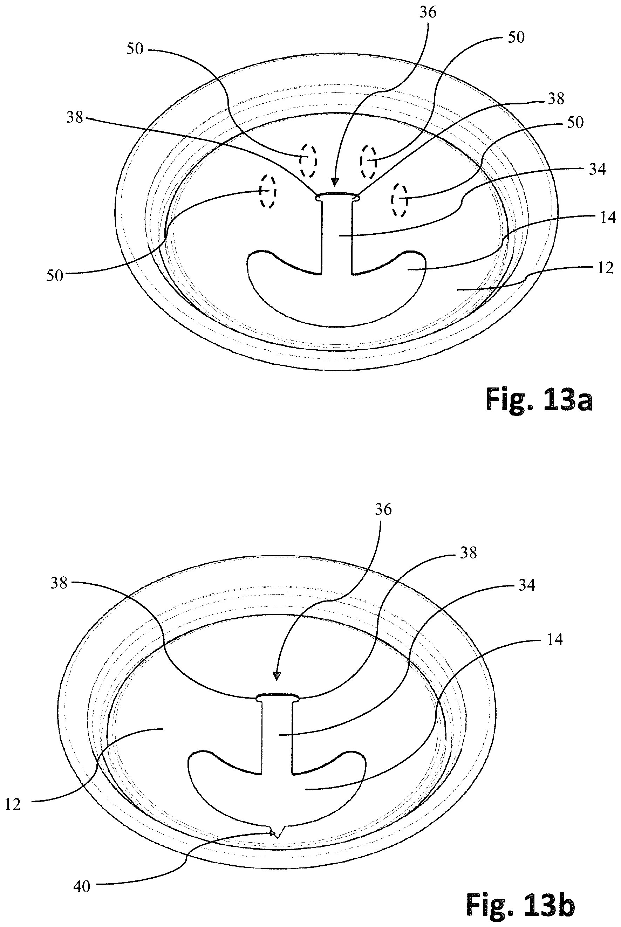

Fig. 13a veranschaulicht in einer schematischen Draufsicht den Deckelspiegel 12, welcher dort ohne Betätigungselement 16 und Verschlusselement 18 gezeigt ist. Der Deckelspiegel 12 weist einen zusätzlichen Durchgangsbereich zu der Ausgussöffnung 14 in Form eines länglichen Führungsschlitzes 34 auf. In dem Führungsschlitz 34 ist die Verbindung zwischen dem Betätigungselement 16 und dem Verschlusselement 18 angeordnet und so die Verschiebung des Verschlusselements 18 zwischen der Schließstellung und der Offenstellung geführt. In dem Führungsschlitz 34 ist vor dem erstmaligen Öffnen der Dose zudem auch das Arretierelement 32 angeordnet.

In der gezeigten Ausführungsform sind die Ausgussöffnung 14 und der Führungsschlitz 34 als gemeinsame Durchgangsöffnung in dem Deckelspiegel 12 gebildet. Dadurch können diese kostengünstig gemeinsam gefertigt werden, beispielsweise in einem Stanzprozess. An seinem der Ausgussöffnung 14 abgewandten Endbereich 36 weist der Dosendeckel 12 zwei Entlastungskerben 38 auf, welche sich im Wesentlichen quer zur Längserstreckung des Führungsschlitzes 34 erstrecken. Dadurch sind die Ecken im Endbereich 36 des Führungsschlitzes 34 gerundet ausgebildet, was einem Einreißen aufgrund eines Innendrucks in der Dose entgegenwirkt.

Der Deckelspiegel 12 kann zudem eine Gestaltung aufweisen, welche einen Druckausgleich beim Öffnen der Dose bewirken kann. Beispielsweise kann, wie in Fig. 13b gezeigt, optional an einem der Bewegungsrichtung des Betätigungselements 16 von der Schließstellung in die Offenstellung abgewandten Bereich benachbart zu der Ausgussöffnung 14 eine Kerbe 40 angeordnet sein. Diese Kerbe kann vor dem eigentlichen Freigeben der Ausgussöffnung 14 einen dünnen Kanal zwischen dem Innenraum und dem Äußeren der Dose bilden. Durch einen Überdruck in dem Doseninneren kann so ein deutliches Zischgeräusch entstehen, welches dem Benutzer diesen Überdruck und damit die Frische des Getränks signalisiert.

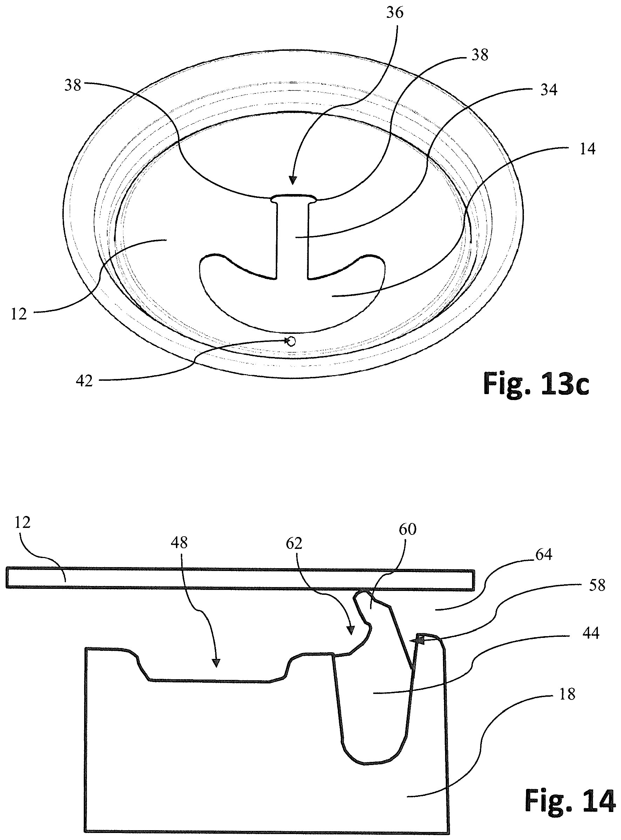

Alternativ zu einer Kerbe kann, wie in Fig. 13c gezeigt, optional auch eine zusätzliche Durchgangsöffnung 42 mit einem geringen Durchmesser in diesem Bereich angeordnet sein, um ebenfalls einen Kanal mit geringem Querschnitt vor dem eigentlichen Freigeben der Ausgussöffnung 14 beim Öffnen freizugeben. Die Durchgangsöffnung 42 kann auch als Druckausgleichöffnung bezeichnet werden. Auch hiermit kann akustisch der Überdruck und damit die Frische des Doseninhalts einem Benutzer signalisiert werden.

In Fig. 3 ist der Dosendeckel 10 mit dem Verschlusselement 18 in der Schließstellung in einer Unteransicht dargestellt. Das Verschlusselement 18 deckt die Ausgussöffnung 14 und den Führungsschlitz 34 ab. Die Ausgussöffnung 14 ist in der Offenstellung durch das Verschlusselement 18 dagegen größtenteils freigegeben. Insbesondere wird die Ausgussöffnung 14 so freigegeben, dass unmittelbar ein Trinkhalm (nicht gezeigt) durch die Ausgussöffnung 14 in die Dose geführt werden kann.

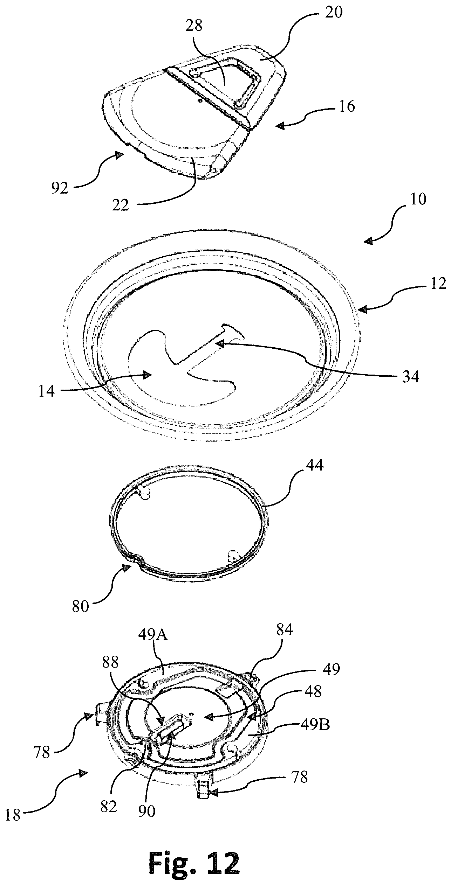

Wie in Fig. 3 und 12 zu erkennen ist, weist das Verschlusselement 18 zwei randseitige Vorsprünge 78 auf, welche im Wesentlichen auf einer in Schließrichtung weisenden Seite des Verschlusselements angeordnet sind. In der Schließstellung liegen die zwei Vorsprünge 78 an der Sicke 13 und/oder dem Dosenkörper an. Dadurch bilden die Vorsprünge 78 eine Positionierungshilfe und zudem einen Anschlag für eine definierte Schließstellung. Zudem sind die beiden Vorsprünge 78 vorliegend, wie in Fig. 12 zu erkennen, hakenförmig ausgebildet. Damit können die Vorsprünge 78 bei der Fertigung des Dosendeckels 12 als Montagehilfe dienen. Beispielsweise kann das Verschlusselement 18 mit den Vorsprüngen 78 hängend in einer vorbestimmten Orientierung einer Anlage zugeführt werden und so einfach vorher als Schüttgut bereitgestellt werden.

In Fig. 12 ist zu erkennen, dass an dem Verschlusselement 18 in einer oberseitigen, dem Deckelspiegel 12 zugewandten Nut eine Dichtung 44 angeordnet ist. Das Verschlusselement 18 ist mit dem Betätigungselement 16 derart verbunden, dass die Dichtung 44 unterseitig gegen den Deckelspiegel 12 gepresst wird und so die Ausgussöffnung 14 in der Schließstellung abdichtet. Zu diesem Zweck liegt das Betätigungselement 16 vorzugsweise nur mit seinem gekrümmten Rand 46 oberseitig auf dem Deckelspiegel 12 auf und kann somit leicht vorgespannt werden. Beispielsweise kann das Betätigungselement im unverbundenen Zustand entlang eines Mittenbereichs der Unterseite gewölbt ausgebildet sein und im mit dem Verschlusselement 18 verbundenen Zustand zu diesem hin gebogen sein. Insbesondere kann das Verschlusselement, insbesondere dessen Unterseite, im unverbundenen Zustand bombiert sein, insbesondere konkav bombiert.

Die Dichtung 44 ist umlaufend am Verschlusselement 18 ausgebildet. Zudem weist die Dichtung 44 vorzugsweise zwei radial nach innen verlaufende Fortsätze auf. An diesen kann die Dichtung 44 angespritzt bzw. bei deren Spritzen entlüftet werden. Zudem können diese Fortsätze die Dichtung 44 zusätzlich gegen Rotation in der Nut sichern.

Im Bereich des Filmscharniers 24 weist das Verschlusselement 18 einen an dem Deckelspiegel 12 anliegenden Bereich 49 auf, welcher gegenüber einem umgebenden Bereich nach oben vorstehen kann. Dieser kann das Betätigungselement 18, insbesondere das erste und/oder das zweite Filmscharnier 24, 70, sowie den Deckelspiegel 12 in diesem Bereich beim Verschwenken des Griffabschnitts 20 abstützen. Dadurch kann eine Überlastung und ungewollte Verformung des Deckelspiegels 12 vermieden werden. Der Bereich 49 wird vorzugsweise von der Dichtung umgeben.

Alternativ oder zusätzlich kann das Verschlusselement 18 an seiner Oberseite mindestens einen oder mehrere weitere anliegende Bereich 49A, 49B aufweisen, der/die vorzugsweise außerhalb der Dichtung 44 angeordnet sind, insbesondere auf gegenüberliegenden Seiten des Versschlusselements 18. Der jeweilige Bereich 49A, 49B stützt den Deckelspiegel 12 vorzugsweise in einem jeweiligen Endbereich des Filmscharniers 24 von unten ab.

In dem umgebenden Bereich weist das Verschlusselement 18 eine umlaufende Vertiefung 48 auf. Diese Vertiefung 48 kann in der Offenstellung einen zusätzlichen Luftkanal zwischen dem Doseninneren und einer Umgebung bereitstellen. Über den Luftkanal kann Luft beim Ausgießen zurückströmen, um ein schnelles und gleichmäßiges Ausschütten zu ermöglichen. Ein Einlass des Luftkanals kann beispielsweise durch eine Öffnung zwischen dem Betätigungselement 16 und dem Verschlusselement 18 gebildet sein. Der Einlass wird optional zusätzlich durch einen rückversetzten Bereich 80 der Dichtung 44 nach Art einer Kerbe und eine korrespondierende an der Oberseite des Verschlusselements 18 vorstehende Wand 82 gebildet. Alternativ oder zusätzlich kann das Betätigungselement 16 auch eine unterseitige Vertiefung 92 in einem Randbereich des Befestigungsabschnitts 22, welcher einem der Ausgussöffnung 14 zugewandten Ende des Verschlusselements 18 gegenüberliegend angeordnet ist, zu diesem Zweck aufweisen. In der Schließstellung ist diese Öffnung durch den Deckelspiegel 12 blockiert. Durch Verschieben dieses Einlasses in den Bereich der Ausgussöffnung 14 wird ein Spalt zwischen dem Betätigungselement 16 und dem Verschlusselement 18 freigegen, durch den Luft strömen kann.

Als Einlass des Luftkanals kann eine Öffnung freigegeben werden, indem das Verschlusselement 18 an der umlaufenden Sicke 13 des Deckelspiegels 12 ausgelenkt und so von der Unterseite des Deckelspiegels 12 beabstandet wird. Zu diesem Zweck kann das Verschlusselement 18 einen randseitigen Vorsprung 84 an einer der Ausgussöffnung 14 abgewandten Seite aufweisen. Dabei kann sich das Verschlusselement 18 und/oder der Deckelspiegel 12 elastisch verformen, um ebenfalls einen Spalt freizugeben. Das Verschlusselement kann gewissermaßen geringfügig in einem Endbereich nach unten rotieren. Diese Rotation kann besonders gut in Fig. 8e erkannt werden. Alternativ kann in dem Deckelspiegel 12 eine Vertiefung 50 in Form einer Prägung in Richtung des Doseninneren nach unten in diesem Bereich angeordnet sein (nicht gezeigt), welche ebenfalls ein solches bereichsweises Auslenken des Verschlusselements 18 von dem Deckelspiegel 12 bewirken kann.

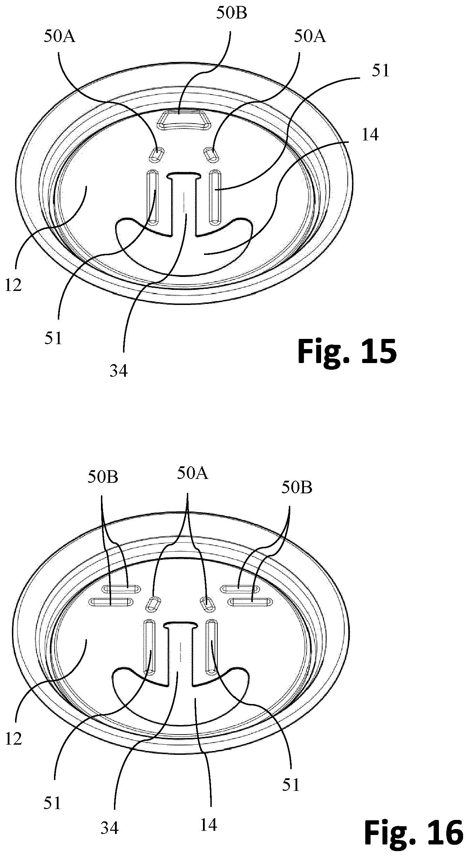

Alternativ oder zusätzlich können eine oder mehrere Ausbauchungen 50 in Richtung nach oben im Deckelspiegel 12 ausgebildet sein, womit ebenfalls wenigstens ein Durchgang für den Luftkanal in der Offenstellung freigegeben werden kann. Bei dieser Variante ist der Deckelspiegel 12 besonders widerstandsfähig gegen eine Verformung durch einen Doseninnendruck. In Fig. 13a sind beispielhaft vier Ausbauchungen 50 durch gestrichelte Linien illustriert. Diese können als Prägungen hergestellt werden. Weitere mögliche Ausgestaltungen werden unten mit Bezug auf Fig. 15 und 16 näher besprochen.

Anhand der Schnittansichten Fig. 8a bis 8e soll nochmals das Verstellen des Dosendeckels 10 aus seiner Schließstellung in die Offenstellung erläutert werden. In Fig. 8a ist der Dosendeckel 10 geschlossen. Dabei liegt der Griffabschnitt 20 und der Arretierabschnitt 28 im Wesentlichen an der Oberseite des Deckelspiegels 12 an. Das Arretierelement 32 befindet sich in dem Führungsschlitz 34 und vorzugswiese in einer Ausnehmung 45 an der Oberseite des Verschlusselements 18 und/oder in der Vertiefung 48. Das Arretierelement 32 befindet sich im Eingriff mit dem Deckelspiegel 12. In Fig. 8b wurde der Griffabschnitt 20 angehoben und um die Gelenkachse des ersten Filmscharniers 24 verschwenkt. Das Arretierelement 32 ist jedoch immer noch im Eingriff mit dem Deckelspiegel 12. Dadurch werden die Stegelemente 72 gebrochen. In Fig. 8c ist der Griffabschnitt 20 so weit verschwenkt worden, dass der Arretierabschnitt 28 um die Gelenkachse des zweiten Filmscharniers 70 rotiert ist und sich der Eingriff des Arretierelements 32 mit dem Deckelspiegel 12 gelöst hat. Ein Verstellen des Betätigungselements 16 und damit des Verschlusselements 18 durch ein translatorisches Verschieben entlang des Deckelspiegels 12, geführt an dem Führungsschlitz 34 ist nun möglich. Fig. 8d illustriert, wie der Arretierabschnitt 28 nach Lösen der Arretierung selbsttätig nach oben schwenkt, um eine Spannung in dem zweiten Filmscharnier 70 abzubauen. In Fig. 8e wurde das Betätigungselement 16 und damit auch das Verschlusselement 18 in der Bildebene nach rechts verschoben. Dadurch wurde die Ausgussöffnung 14 freigegeben. Zudem wurde der randseitige Vorsprung 84 an der Sicke 13 nach unten ausgelenkt, womit der Luftkanal zwischen dem Verschlusselement 18 und dem Deckelspiegel 12 freigegeben wurde. Damit kann besonders leicht Luft ins Doseninnere beim Ausschenken einströmen, wodurch das Ausschenken besonders schnell und gleichmäßig verlaufen kann. Zum Wiederverschließen des Dosendeckels 10 wird das Betätigungselement 16 und damit das Verschlusselement in der Bildebene von Fig. 8 nach links bewegt, womit die Ausgussöffnung 14 wieder verschlossen wird.

In Fig. 11 und Fig. 9d ist eine nach unten vorstehende rechteckige Wand 86 an der Unterseite des Betätigungselements 16 zu erkennen. Diese Wand 86 wird beim Verbinden des Betätigungselements 16 mit dem Verschlusselement 18 mittels Ultraschallschweißen vorzugsweise zumindest teilweise aufgeschmolzen. Die so entstehende Verbindung ist besonders fest. Wie in Fig. 12 zu erkennen ist, weist das Verschlusselement 18 eine zu der Wand 86 korrespondierende Nut 88 in seiner Oberseite auf. In diese Nut 88 kann aufgeschmolzenes Material beim Ultraschallschweißen fließen und die Festigkeit der Verbindung zwischen dem Betätigungselement 16 und dem Verschlusselement 18 verbessern. Mittig in der Nut 88 ist ein Vorsprung 90 vorgesehen, welcher nach oben vorstehen kann. Der Vorsprung 90 kann beispielsweise oberseitig spitz zulaufend, insbesondere dachförmig, ausgebildet sein. Auch dieser Vorsprung 90 kann beim Ultraschallschweißen wenigstens teilweise aufgeschmolzen werden. Insgesamt ergibt sich eine Verschränkung von Wand 86, Nut 88 und Vorsprung 90, welcher in einer besonders festen Verbindung resultiert.

Fig. 10 zeigt den Dosendeckel 10 in einer Unteransicht ohne Deckelspiegel 12. Wie dort zu erkennen ist, kann das Verschlusselement 18 an seiner Unterseite eine Rippenstruktur mit Rippen und dazwischen angeordneten Vertiefungen aufweisen. Dadurch kann das Verschlusselement 18 unter Gewichts- und Materialeinsparung versteift werden. Im Bereich der Ultraschallverschweißung, insbesondere im Bereich der Nut 88 und des Vorsprungs 90, ist das Verschlusselement 18 vorzugsweise frei von einer Rippenstruktur. Dadurch wird eine günstige Anlagefläche für eine Ultraschallschweißsonde bereitgestellt.

Fig. 11 zeigt, dass das Betätigungselement 16 eine ähnliche Rippenstruktur mit Rippen und dazwischen angeordneten Vertiefungen wie das Verschlusselement 18 an seiner Unterseite aufweisen kann. Auch diese Rippenstruktur ist vorzugsweise nicht im Bereich der Verbindung, insbesondere der Wand 86, vorgesehen.

Die Verbindung des Verschlusselements 18 mit dem Betätigungselement 16 durchdringt nicht das Verschlusselement 18. Die Verbindung des Verschlusselements 18 mit dem Betätigungselement 16 ist in dem Führungsschlitz 34 wenigstens teilweise angeordnet. Durch die rechteckige Form der Verbindung, vorgegeben beispielsweise durch die Form der Wand 86, der Nut 88 und/oder des Vorsprungs 90 kann sich die Verbindung zur Führung der Verstellbewegung zwischen Schließstellung und Offenstellung an dem durch den Deckelspiegel 12 gebildeten Rand des Führungsschlitzes 34 abstützen.

Die Verbindung kann durch deren rechteckige Form zudem auch eine Verdrehsicherung bereitstellen. Die Verbindung weist so nämlich zwei im Wesentlichen ebene Flächen auf. Die ebenen Flächen erstrecken sich beispielsweise im Wesentlichen parallel zu dem Rand des Deckelspiegels 12, welcher den Führungsschlitz 34 begrenzt. Die ebenen Flächen können sich an diesem Rand beim Verschieben des Betätigungselements 16 entlang des Führungsschlitzes 34 abstützen und so eine unerwünschte Rotation des Betätigungselements 16 verhindern.

Fig. 14 zeigt eine besonders vorteilhafte Querschnittsgestaltung der Dichtung 44 in einer Schnittansicht. Zu erkennen ist, dass die Dichtung 44 in einer Nut 58 des Verschlusselements 18 wenigstens teilweise aufgenommen ist. Die Dichtung 44 weist oberseitig eine Dichtlippe 60 auf, mit welcher diese den Deckelspiegel 12 unterseitig kontaktiert. Die Dichtlippe 60 ist vorzugsweise geneigt. Insbesondere kann sich die Dichtlippe 60 ausgehend von der Nut 58 nach radial innen erstrecken und/oder nach radial innen geneigt sein. Unterhalb und radial innen zu der Dichtlippe 60 weist diese eine Hinterschneidung 62 auf. Bei stärkerem Anpressen der Dichtlippe 60, beispielsweise aufgrund eines erhöhten Doseninnendrucks, kann die Dichtlippe in diesen Freiraum ausweichen. Damit können unterschiedliche Drücke ohne Beschädigung der Dichtung 44 kompensiert werden. Zudem kann eine Betätigungskraft aufgrund von Reibung zwischen der Dichtung 44 und dem Deckelspiegel 12 weniger stark mit dem Doseninnendruck variieren. Radial außenseitig ist vorzugsweise ein Freiraum 64 in der Nut 58 vorgesehen, welcher nicht von der Dichtung 44 belegt ist. Dies ermöglicht eine Ausgleichsbewegung der Dichtlippe 60 bei einer Bewegung in der Bildebene von Fig. 15 nach links, womit die Dichtlippe 60 vor Beschädigungen beim wiederholten Öffnen und Schließen des Dosendeckels 10 geschützt werden kann.

Fig. 15 und 16 zeigen weitere optionale Merkmale und Ausgestaltungen des Deckelspiegels 12, die in Kombination mit jedem der vorgehend beschriebenen Deckelspiegel 12 Verwendung finden können. Der Deckelspiegel 12 weist hierbei mindestens eine erste Vertiefung 50A oder mehrere Vertiefungen 50A auf, die während dem Öffnen des Verschlusselements 20 und/oder in dessen Offenstellung einen zweites offenes Ende des Luftkanals 48 bilden können, wie bereits vorgehend beschrieben.

Die mindestens eine erste Vertiefung 50A ist vorzugsweise so angeordnet, dass sie in der Schließstellung des Verschlusselements 18 innerhalb der Dichtung 44 (siehe Fig. 12 und 14) angeordnet ist.

Die mindestens eine erste Vertiefung 50A ist vorzugsweise so angeordnet, dass sie in der Schließstellung vom Verschlusselement 18 und/oder vom Betätigungselement 16 (in Fig. 15 und 16 nicht gezeigt) überdeckt wird, vorzugsweise vollständig.

Bei Verstellung des Verschlusselements 20 von der Schließstellung in die Offenstellung wird vorzugsweise eine Stellung, insbesondere eine Zwischenstellung, erreicht, in der die Dichtung 50 und/oder das Verschlusselement 20 die mindestens eine erste Vertiefung 50A teilweise überlappt. So kann ein Druckausgleich erreicht werden, insbesondere ein initialer Druckausgleich beim Öffnen des Verschlusselements 18. Die mindestens eine erste Vertiefung 50A kann so angeordnet sein, dass sie in der Offenposition vollständig vom Verschlusselement 18 überlappt wird und/oder vollständig innerhalb der Dichtung 44 angeordnet ist.

In Kombination mit oder unabhängig von der mindestens einen ersten Vertiefung 50A kann der Deckelspiegel 12 mindestens eine zweite Vertiefung 50B aufweisen. Diese ist vorzugsweise so angeordnet, dass sie in der Schließstellung vom Verschlusselement 18 nicht verdeckt wird und/oder in der Schließstellung nicht innerhalb der Dichtung 44 angeordnet ist, auch nicht teilweise. Die mindestens eine zweite Vertiefung 50B ist in der Schließstellung vorzugsweise nicht vom Betätigungselement 16 verdeckt. In der Offenstellung wird die mindestens eine zweite Vertiefung vorzugsweise teilweise (insbesondere nur teilweise) vom Verschlusselement 20 und/oder der Dichtung 50 und/oder dem Betätigungselement 16 überlappt. Die zweite Vertiefung 50B kann somit in der Schließstellung ein alternatives offenes zweites Ende für den Luftkanal 48 bereitstellen. Die Verwendung verschiedener Vertiefungen 50A, 50B ermöglicht es, den Luftfluss durch den Luftkanal 48 selektiv anzupassen. So kann die mindestens eine erste Vertiefung z.B. so dimensioniert sein, dass beim Öffnen ein Zischen entsteht. Die mindestens eine zweite Vertiefung 50B kann z.B. so dimensioniert sein, dass während dem Ausgießen ein Gluckern verhindert wird, insbesondere bei vollständiger Öffnung des Verschlusselements 18.

Die zweite Vertiefung 50B kann z.B. als eine oder mehrere Vertiefungen 50B ausgebildet sein, die in Verschieberichtung des Betätigungselement 16 hinter dem Bedienelement 30 (siehe Fig. 15) und/oder neben dem Betätigungselement 16 angeordnet ist (siehe Fig. 16).

Die mindestens eine erste Vertiefung 50A und/oder die mindestens eine zweite Vertiefung 50B können nach oben oder nach unten vorstehen. Die mindestens eine erste Vertiefung 50A und/oder die mindestens eine zweite Vertiefung 50B kann insbesondere als Prägung im Deckelspiegel 12 ausgebildet sein.

In Kombination mit oder unabhängig von der mindestens einen ersten Vertiefung 50A und/oder der mindestens einen zweiten Vertiefung 50B kann der Deckelspiegel 12 ferner eine oder mehrere (insbesondere zwei) dritte Vertiefungen 51 aufweisen. Diese können mit einem oder mehreren entsprechenden Vorsprüngen 73 auf der Oberseite des Verschlusselements 18 zusammenwirken, um eine Längsführung und/oder eine Verdrehsicherung für das Verschlusselement 18 bereitzustellen. Die Vertiefung 51 steht insofern vorzugsweise nach oben vor. Sie kann als eine Prägung im Deckelspiegel 12 ausgebildet sein.

Obwohl vorstehend ein Dosendeckel und eine Dose beschrieben werden, kann der offenbarte Verschluss auch an anderen Behältern für Flüssigkeiten angebracht werden. Solche Flüssigkeitsbehälter können z.B. aus Karton, Plastik und/oder Metall hergestellt sein. Dies gilt insbesondere für Behälter, die zumindest im Bereich einer Ausgussöffnung aus einem Material hergestellt sind, das eine ausreichende Steifigkeit aufweist. Der vorliegend genannte Deckelspiegel kann bei einem Flüssigkeitsbehälter z.B. durch eine Wand des Behälters ersetzt sein und/oder durch eine solche Wand gebildet werden.

### BEZUGSZEICHENLISTE

- 10: Dosendeckel
- 12: Deckelspiegel
- 13: Sicke
- 14: Ausgussöffnung
- 16: Betätigungselement
- 18: Verschlusselement
- 20: Griffabschnitt
- 22: Befestigungsabschnitt
- 24: erstes Filmscharnier
- 28: Arretierabschnitt
- 30: dünner Bereich
- 32: Arretierelement
- 34: Führungsschlitz
- 36: Endbereich
- 38: Entlastungskerbe
- 40: Kerbe
- 42: Druckausgleichöffnung
- 44: Dichtung
- 45: Ausnehmung
- 48: Vertiefung
- 49: Anliegender Bereich
- 49A: Weiterer anliegender Bereich
- 49B: Weiterer anliegender Bereich
- 50: Vertiefung, Luftkanal
- 58: Nut
- 60: Dichtlippe
- 62: Hinterschneidung
- 64: Freiraum
- 70: zweites Filmscharnier
- 72: Stegelement
- 74: Spalt
- 76: Entlastungskerbe
- 78: randseitiger Vorsprung
- 80: rückversetzter Bereich
- 82: Wand
- 84: randseitiger Vorsprung
- 86: Wand
- 88: Nut
- 90: Vorsprung
- 92: Vertiefung

## Patentansprüche

1. Dosendeckel (10) für eine Dose, vorzugsweise ausgebildet als Getränkedose und/oder als Aufbewahrungsbehälter für Schüttgut, mit:
wenigstens einem Deckelspiegel (12), welcher dazu ausgebildet ist, eine Oberseite der Dose zu begrenzen, vorzugsweise durch Bördeln eines äußeren umlaufenden Rands des Deckelspiegels (12) mit einer seitlichen Wand der Dose, wobei der Deckelspiegel (12) wenigstens eine Ausgussöffnung (14) aufweist, durch welche ein in der Dose befindlicher Stoff ausgeschüttet werden kann;
einem Betätigungselement (16), welches an einer Oberseite des Deckelspiegels (12), welche einem Innenraum der Dose bei daran angebrachtem Dosendeckel abgewandt ist, angeordnet ist; und
einem Verschlusselement (18), welches an einer Unterseite des Deckelspiegels (12), welche einem Innenraum der Dose bei daran angebrachtem Dosendeckel zugewandt ist, angeordnet ist, wobei das Verschlusselement (18) zwischen einer Schließstellung, in welcher das Verschlusselement (18) die Ausgussöffnung (14) fluiddicht und/oder gasdicht verschließt, und einer Offenstellung, in welcher die Ausgussöffnung (14) wenigstens teilweise freigegeben ist, verschiebbar ist;
wobei das Verschlusselement (18) und das Betätigungselement mittels einer Verbindung, vorzugsweise einer Schweißverbindung, aneinander befestigt sind, wobei sich die Verbindung bei Verschiebung des Verschlusselements (18) aus der Schließstellung in die Offenstellung vorzugsweise entlang eines Führungsschlitzes in dem Deckelspiegel bewegt,
wobei das Betätigungselement (16) einen Befestigungsabschnitt (22), welcher die Verbindung mit dem Verschlusselement (18) aufweist, einen Arretierabschnitt (28), mittels welchem das Betätigungselement (16) wenigstens vor einem erstmaligen Verstellen aus der Schließstellung in die Offenstellung an dem Deckelspiegel (12) in der Schließstellung arretiert ist, und einen Griffabschnitt (20), welcher zum Greifen Zwecks der Verstellung zwischen der Offenstellung und der Schließstellung ausgebildet ist, aufweist,
wobei der Befestigungsabschnitt (22) mit dem Griffabschnitt (20) mittels eines ersten Gelenks (24) verbunden ist, das eine erste Gelenkachse aufweist, und
wobei der Arretierabschnitt (28) mit dem Griffabschnitt (20) mittels eines zweiten Gelenks (70) verbunden ist, das eine zweite Gelenkachse aufweist,
**dadurch gekennzeichnet, dass** das Verschlusselement (18) zwischen der Schließstellung und der Offenstellung im Wesentlichen translatorisch entlang des Deckelspiegels (12) geführt mittels des Betätigungselements (16) verschiebbar ist, und dass die zweite Gelenkachse zwischen der ersten Gelenkachse und dem Arretierabschnitt (28) angeordnet ist.

2. Dosendeckel (10) nach Anspruch 1,
wobei das Verschlusselement (18) und/oder das Betätigungselement (16) jeweils aus einem Kunststoff gebildet sind, insbesondere aus einem Kunststoff bestehen;
und/oder
wobei das erste Gelenk (24) und/oder das zweite Gelenk (70) als Filmscharnier ausgebildet sind;
und/oder
wobei das erste Gelenk (24) durch eine Einkerbung gebildet wird, die sich von einer oberen Fläche des Betätigungselements (16) nach unten in das Betätigungselement erstreckt, und wobei das zweite Gelenk (70) durch eine Einkerbung gebildet wird, die sich von einer unteren Fläche des Betätigungselements (16) nach oben in das Betätigungselement (16) erstreckt.

3. Dosendeckel (10) nach einem der vorhergehenden Ansprüche,
wobei der Griffabschnitt (20) gegenüber dem Befestigungsabschnitt (22) entlang der ersten Gelenkachse nach oben schwenkbar ist, und wobei der Arretierabschnitt (28) gegenüber dem Griffabschnitt (20) entlang der zweiten Gelenkachse nach unten schwenkbar ist;
und/oder
wobei sich die erste Gelenkachse und/oder die zweite Gelenkachse quer, bevorzugt orthogonal, zu einer Längsachse des Führungsschlitzes (34) erstreckt, wobei sich die erste Gelenkachse und die zweite Gelenkachse parallel zueinander erstrecken, und wobei die erste Gelenkachse und die zweite Gelenkachse voneinander beabstandet sind.

4. Dosendeckel (10) nach einem der vorhergehenden Ansprüche,
wobei der Griffabschnitt (20) mit dem Arretierabschnitt (28) mittels wenigstens einem Stegelement (72) verbunden ist, insbesondere an einem dem zweiten Gelenk (70) abgewandten Ende des Arretierabschnitts (28), wobei das Stegelement (72) dazu ausgebildet ist, bei einem relativen Schwenken des Griffabschnitts (20) zu dem Arretierabschnitt (28), insbesondere bei einem erstmaligen Verschwenken des Griffabschnitts (20) aus seiner Verstaustellung in seine Betätigungsstellung, zu brechen;
und/oder
wobei das erste Gelenk (24) über die gesamte Breite des Griffabschnitts (20) und/oder des Befestigungsabschnitts (22) verläuft, und wobei das zweite Gelenk (70) nur über einen Teil der Breite des Griffabschnitts (20) verläuft, insbesondere nur über einen mittleren Teil des Griffabschnitts (20.

5. Dosendeckel (10) nach einem der vorhergehenden Ansprüche,
wobei der Befestigungsabschnitt (22) an seiner Unterseite einen Vorsprung aufweist, welcher mit einem Teilbereich des Verschlusselements verbunden ist, wobei der Vorsprung wenigstens teilweise in dem Führungsschlitz (34) des Deckelspiegels (12) angeordnet ist; und/oder
wobei das Verschlusselement (18) an seiner Oberseite einen Vorsprung (90) aufweist, welcher mit einem Teilbereich des Befestigungsabschnitts (22) verbunden ist, wobei der Vorsprung (90) wenigstens teilweise in dem Führungsschlitz (34) des Deckelspiegels (12) angeordnet ist;
und/oder
wobei die Verbindung des Verschlusselements (18) mit dem Betätigungselement (16) wenigstens teilweise zur Führung bei der Verschiebung des Verschlusselements (18) aus der Schließstellung in die Offenstellung an einem den Führungsschlitz (34) wenigstens teilweise begrenzenden Rand des Deckelspiegels (12) anliegt;
und/oder
wobei das Betätigungselement (16) mit dem Verschlusselement (18) mittels einer Ultraschall- oder Reibverschweißung an einer einzigen Stelle verbunden ist.

6. Dosendeckel (10) nach einem der vorhergehenden Ansprüche,
wobei an der Verbindung in einem Bereich, der sich durch den Führungsschlitz (34) erstreckt, mindestens eine ebene Fläche ausgebildet ist, wobei die mindestens eine ebene Fläche einem den Führungsschlitz (34) begrenzenden Rand des Deckelspiegels (12) zugewandt ist;
und/oder
wobei der Deckelspiegel (12) und/oder das Verschlusselement (18) eine Kerbe oder Prägung in einem Teilbereich aufweist, welcher einem Teilbereich der Ausgussöffnung, welcher bei dem Verstellen des Verschlusselements von der Schließstellung in die Offenstellung zuerst freigegeben wird, benachbart angeordnet ist oder diesen Teilbereich begrenzt.

7. Dosendeckel (10) nach einem der vorhergehenden Ansprüche,
wobei der Deckelspiegel (12) ferner eine Druckausgleichöffnung (42) aufweist, wobei die Querschnittfläche der Druckausgleichöffnung (42) kleiner als die Querschnittfläche der Ausgussöffnung (14) ist,
wobei die Druckausgleichöffnung (42) in der Schließstellung von dem Verschlusselement (18) fluiddicht und/oder gasdicht verschlossen ist und in der Offenstellung wenigstens teilweise freigegeben ist,
wobei die Druckausgleichöffnung (42) derart angeordnet ist, dass diese beim Verstellen des Verschlusselements (18) von der Schließstellung in die Offenstellung vor der Ausgussöffnung (14) freigegeben wird.

8. Dosendeckel (10) nach einem der vorhergehenden Ansprüche,
wobei in der Offenstellung zwischen dem Verschlusselement (18) und dem Deckelspiegel (12) ein Luftkanal gebildet ist, dessen erstes Ende an der Oberseite des Deckelspiegels (12) und/oder an einem dem äußeren Deckelspiegelrand abgewandten Endbereich der Ausgussöffnung (14) mündet, und dessen zweites Ende an einer Unterseite des Deckelspiegels (12) an einem der Ausgussöffnung (14) abgewandten Endbereich des Verschlusselements (18) mündet;
wobei der Luftkanal in der Schließstellung des Verschlusselements (18) zwischen der Offenstellung und Schließstellung blockiert und/oder gegenüber dem Innenraum abgedichtet ist.

9. Dosendeckel (10) nach dem vorhergehenden Anspruch,
wobei wenigstens ein Teilbereich des Luftkanals durch eine Vertiefung (48) in dem Verschlusselement (18) und/oder dem Deckelspiegel (12) gebildet ist;
vorzugsweise wobei das erste Ende des Luftkanals in der Offenstellung durch eine Lücke zwischen dem Verschlusselement (18) und dem Betätigungselement (16) und/oder zwischen der Dichtung (44) und dem Betätigungselement (16) gebildet ist, vorzugsweise gebildet durch eine randseitige Aussparung in einer Unterseite des Betätigungselements (16), wobei in der Schließstellung vorzugsweise ein Teilbereich des Deckelspiegels (12) in der Lücke angeordnet ist und dadurch den Luftfluss blockiert.

10. Dosendeckel (10) nach dem vorhergehenden Anspruch,
wobei das zweite Ende des Luftkanals in der Offenstellung durch eine Lücke zwischen dem Verschlusselement (18) und dem Deckelspiegel (12) und/oder zwischen der Dichtung (44) und dem Deckelspiegel (12) gebildet ist;
wobei das zweite Ende des Luftkanals in der Offenstellung dadurch gebildet wird, dass
- der Deckelspiegel (12) eine oder mehrere in Richtung der Oberseite vorstehende Prägungen oder Ausbauchungen (50) aufweist, wobei die Prägungen oder Ausbauchungen (50) in der Offenstellung des Verschlusselements (18) einen Umströmungsweg für die Luft um das Verschlusselement (18) bilden, wodurch die Dichtwirkung des Verschlusselements (18) mit der Unterseite des Deckelspiegels (12) im Bereich der einen oder mehreren Prägungen (50) aufgehoben ist, und/oder
- der Deckelspiegel (12) ein oder mehrere in Richtung der Unterseite vorstehende Prägungen aufweist, die das Verschlusselement (18) in der Offenstellung zumindest abschnittsweise nach unten auslenken, wodurch die Dichtwirkung des Verschlusselements (18) mit der Unterseite des Deckelspiegels (12) im ausgelenkten Bereich aufgehoben ist, und/oder
- das Verschlusselement (18) in der Offenstellung an einer radial äußeren Sicke (13) des Deckelspiegels (12) nach unten ausgelenkt wird, wodurch die Dichtwirkung des Verschlusselements (18) mit der Unterseite des Deckelspiegels (12) im ausgelenkten Bereich aufgehoben ist.

11. Dosendeckel (10) nach einem der vorhergehenden Ansprüche,
wobei der Führungsschlitz (34) und die Ausgussöffnung (14) eine gemeinsame Durchgangsöffnung in dem Deckelspiegel (12) bilden, und wobei der Führungsschlitz (34) länglich ausgebildet ist, wobei eine Längsrichtung des Führungsschlitzes (34) einer Verschiebungsrichtung des Verschlusselements (18) entspricht;
und/der
wobei das Betätigungselement (16) an der Unterseite einen Mittenbereich und einen Außenbereich aufweist, wobei der Mittenbereich gegenüber dem Außenbereich zurückgesetzt ist, wobei das Verschlusselement (18) sich über den Außenbereich an der Oberseite des Deckelspiegels (12) abstützt, wodurch eine Oberseite des Verschlusselements (18) und/oder eine Oberseite der Dichtung (44) gegen die Unterseite des Deckelspiegels (12) gepresst wird;
und/oder
wobei der Führungsschlitz (34) an seinem von der Ausgussöffnung (14) abgewandten Ende wenigstens eine Entlastungskerbe (38) aufweist.

12. Dosendeckel (10) nach einem der vorhergehenden Ansprüche,
wobei der Arretierabschnitt (28) ein von der Unterseite des Betätigungselements (16) nach unten vorstehendes Arretierelement (32) aufweist;
wobei das Arretierelement (32) als Haken ausgebildet ist;
wobei das Arretierelement (32) vor einem erstmaligen Verstellen aus der Schließstellung in die Offenstellung im Führungsschlitz (34) angeordnet ist, vorzugsweise an einem von der Ausgussöffnung (14) abgewandten Endbereich des Führungsschlitzes (34), und dort mit dem Deckelspiegel (12) eingreift.

13. Dosendeckel (10) nach dem vorhergehenden Anspruch,
wobei das Arretierelement (32) vor einem erstmaligen Verstellen des Betätigungselements (16) aus der Schließstellung in die Offenstellung in einer Vertiefung (45, 48) des Verschlusselements angeordnet ist;
und/oder
wobei der Griffabschnitt (20), insbesondere in seiner Verstaustellung, den Arretierabschnitt (28) wenigstens teilweise einrahmt;
und/oder
wobei der Befestigungsabschnitt (22) und der Arretierabschnitt (28) und der Griffabschnitt (20) einstückig ausgebildet sind.

14. Dosendeckel (10) nach einem der vorhergehenden Ansprüche,
wobei das Verschlusselement (18) wenigstens einen Stützabschnitt (49, 49A, 49B) aufweist;
wobei der Stützabschnitt (49, 49A, 49B) an der Unterseite des Deckelspiegels (12) in wenigstens einem Bereich anliegt, welcher der Position des ersten Gelenks (24) und/oder des zweiten Gelenks (70) entspricht, wobei der Stützabschnitt (49, 49A, 49B) aus einem härteren Material als die Dichtung (44) ausgebildet ist.

15. Dose, vorzugsweise ausgebildet als Getränkedose und/oder als Aufbewahrungsbehälter für Schüttgut, aufweisend wenigstens einen Dosendeckel (10) nach einem der vorgehenden Ansprüche.

## Claims

1. Can lid (10) for a can, preferably configured as a beverage can and/or as a storage container for bulk material, comprising:
at least one lid surface (12) configured to delimit an upper side of the can, preferably by crimping an outer circumferential edge of the lid surface (12) with a lateral wall of the can, wherein the lid surface (12) has at least one pouring opening (14) through which a substance contained in the can can be poured out;
an actuating element (16) which is arranged on an upper side of the lid surface (12) facing away from an interior of the can, when the can lid is attached thereto; and
a closure element (18) which is arranged on a lower side of the lid surface (12) which faces an interior of the can, when the can lid is attached thereto, wherein the closure element (18) is displaceable between a closed position, in which the closure element (18) closes the pouring opening (14) in a fluid-tight and/or gas-tight manner, and an open position, in which the pouring opening (14) is at least partially uncovered;
wherein the closure element (18) and the actuating element are fastened to one another by means of a connection, preferably a welded connection, wherein the connection preferably moves along a guide slot in the lid surface when the closure element (18) is displaced from the closed position into the open position,
wherein the actuating element (16) comprises a fastening portion (22) which comprises the connection to the closure element (18), a locking portion (28), by means of which the actuating element (16) is locked in the closed position on the lid surface (12) at least before an initial displacement from the closed position into the open position, and a handle portion (20), which is configured for gripping for the purpose of displacement between the open position and the closed position,
wherein the fastening portion (22) is connected to the handle portion (20) by means of a first joint (24) having a first joint axis, and
wherein the locking portion (28) is connected to the handle portion (20) by means of a second joint (70) which has a second joint axis,
**characterised in that** the closure element (18) is displaced from the closed position into the open position substantially translationally along the lid surface (12) in a guided manner by means of the actuating element (16), and the second joint axis is arranged between the first joint axis and the locking portion (28).

2. Can lid (10) according to claim 1,
wherein the closure element (18) and/or the actuating element (16) are each made from a plastic, in particular consist of a plastic;
and/or
wherein the first joint (24) and/or the second joint (70) are configured as a film hinge;
and/or
wherein the first joint (24) is formed by a notch extending downwardly into the actuation element from an upper surface of the actuating member (16), and wherein the second joint (70) is formed by a notch extending upwardly into the actuating member (16) from a lower surface of the actuating member (16).

3. Can lid (10) according to one of the preceding claims,
wherein the handle portion (20) is pivotable upwardly relative to the fastening portion (22) along the first hinge axis, and wherein the locking portion (28) is pivotable downwardly relative to the handle portion (20) along the second hinge axis;
and/or
wherein the first joint axis and/or the second joint axis extend transversely, preferably orthogonally, to a longitudinal axis of the guide slot (34), wherein the first joint axis and the second joint axis extend parallel to one another, and wherein the first joint axis and the second joint axis are spaced apart from one another.

4. Can lid (10) according to one of the preceding claims,
wherein the handle portion (20) is connected to the locking portion (28) by means of at least one bar (72), in particular at an end of the locking portion (28) facing away from the second joint (70), wherein the bar (72) is configured to break, when the handle portion (20) is pivoted relative to the locking portion (28), in particular when the handle portion (20) is pivoted for the first time from its stowed position into its actuation position;
and/or
wherein the first joint (24) extends over the entire width of the handle portion (20) and/or the fastening portion (22), and wherein the second joint (70) extends only over a part of the width of the handle portion (20), in particular only over a central part of the handle portion (20).

5. Can lid (10) according to one of the preceding claims,
wherein the fastening portion (22) has a projection on its lower side which is connected to a partial region of the closure element, wherein the projection is arranged at least partially in the guide slot (34) of the lid surface (12); and/or
wherein the closure element (18) has a projection (90) on its upper side, which is connected to a partial region of the fastening section (22), wherein the projection (90) is arranged at least partially in the guide slot (34) of the lid surface (12);
and/or
wherein the connection of the closure element (18) to the actuating element (16) rests at least partially against an edge of the lid surface (12) at least partially delimiting the guide slot (34) for guidance when the closure element (18) is displaced from the closed position into the open position;
and/or
wherein the actuating element (16) is connected to the closure element (18) at a single point by means of an ultrasonic or friction weld.

6. Can lid (10) according to one of the preceding claims,
wherein at least one flat surface is formed at the connection in a region extending through the guide slot (34), wherein the at least one flat surface faces an edge of the lid surface (12) delimiting the guide slot (34);
and/or
wherein the lid surface (12) and/or the closure element (18) has a notch or embossing in a partial region which is arranged adjacent to a partial region of the pouring opening which is first uncovered when the closure element is displaced from the closed position to the open position or delimits this partial region.

7. Can lid (10) according to one of the preceding claims,
wherein the lid surface (12) further comprises a pressure equalisation opening (42),
wherein the cross-sectional area of the pouring opening (42) is smaller than the cross-sectional area of the pouring opening (14),
wherein the pressure equalisation opening (42) is closed in a fluid-tight and/or gas-tight manner by the closure element (18) in the closed position and is at least partially uncovered in the open position,
wherein the pressure equalisation opening (42) is arranged such that it is uncovered prior to the pouring opening (14) when the closure element (18) is displaced from the closed position into the open position.

8. Can lid (10) according to one of the preceding claims,
wherein, in the open position, an air duct is formed between the closure element (18) and the lid surface (12), the first end of which opens at the upper side of the lid surface (12) and/or at an end region of the pouring opening (14) facing away from the lower side of the lid surface, and the second end of which opens at a lower side of the lid surface (12) at an end region of the closure element (18) facing away from the pouring opening (14);
wherein, in the closed position of the closure element (18), the air duct is blocked between the open position and the closed position and/or sealed off from the interior.

9. Can lid (10) according to the preceding claim,
wherein at least a partial region of the air duct is formed by a recess (48) in the closure element (18) and/or the lid surface (12);
preferably wherein, in the open position, the first end of the air duct is formed by a gap between the closure element (18) and the actuating element (16) and/or between the seal (44) and the actuating element (16), preferably formed by a recess at the edge in an lower side of the actuating element (16), wherein, in the closed position, preferably a partial region of the lid surface (12) is arranged in the gap and thereby blocks the air flow.

10. Can lid (10) according to the preceding claim,
wherein, in the open position, the second end of the air duct is formed by a gap between the closure element (18) and the lid surface (12) and/or between the seal (44) and the lid surface (12);
wherein the second end of the air duct is formed in the open position by
- the lid surface (12) has one or more embossings or bulges (50) projecting in the direction of the upper side, the embossings or bulges (50) forming a flow path for the air around the closure element (18) in the open position of the closure element (18), as a result of which the sealing effect of the closure element (18) with the lower side of the lid surface (12) is cancelled in the region of the one or more embossings (50), and/or
- the lid surface (12) has one or more embossings projecting in the direction of the lower side, which deflect the closure element (18) downwards at least in sections in the open position, as a result of which the sealing effect of the closure element (18) with the lower side of the lid surface (12) is cancelled in the deflected region, and/or
- in the open position, the closure element (18) is deflected downwards at a radially outer bead (13) of the lid surface (12), as a result of which the sealing effect of the closure element (18) with the lower side of the lid surface (12) is cancelled in the deflected region.

11. Can lid (10) according to one of the preceding claims,
wherein the guide slot (34) and the pouring opening (14) form a common passage opening in the lid surface (12), and wherein the guide slot (34) is elongate, wherein a longitudinal direction of the guide slot (34) corresponds to a displacement direction of the closure element (18);
and/or
wherein the actuating element (16) has a centre region and an outer region on the lower side, wherein the centre region is set back relative to the outer region, wherein the closure element (18) is supported on the upper side of the lid surface (12) via the outer region, as a result of which an upper side of the closure element (18) and/or an upper side of the seal (44) is pressed against the lower side of the lid surface (12);
and/or
wherein the guide slot (34) has at least one relief notch (38) at its end facing away from the pouring opening (14).

12. Can lid (10) according to one of the preceding claims,
wherein the locking section (28) has a locking element (32) projecting downwards from the lower side of the actuating element (16);
wherein the locking element (32) is configured as a hook;
wherein the locking element (32) is arranged in the guide slot (34) before an initial adjustment from the closed position into the open position, preferably at an end region of the guide slot (34) facing away from the pouring opening (14), and engages there with the lid surface (12).

13. Can lid (10) according to the preceding claim,
wherein the locking element (32) is arranged in a recess (45, 48) of the closure element before the actuating element (16) is displaced from the closed position into the open position for the first time;
and/or
wherein the handle portion (20), in particular in its stowed position, at least partially frames the locking portion (28);
and/or
wherein the fastening section (22) and the locking section (28) and the handle section (20) are formed as one piece.

14. Can lid (10) according to one of the preceding claims,
wherein the closure element (18) has at least one support section (49, 49A, 49B);
wherein the support portion (49, 49A, 49B) bears against the lower side of the lid surface (12) in at least one region which corresponds to the position of the first joint (24) and/or the second joint (70), wherein the support portion (49, 49A, 49B) is made from a harder material than the seal (44).

15. Can, preferably configured as a beverage can and/or as a storage container for bulk material, comprising at least one can lid (10) according to one of the preceding claims.

## Revendications

1. Couvercle de canette (10) pour une canette, de préférence conçue comme canette de boisson et/ou comme récipient de stockage pour des produits en vrac,
comprenant :
au moins une surface de couvercle (12) qui est conçue pour délimiter une face supérieure de la canette, de préférence par sertissage d'un bord périphérique extérieur de la surface de couvercle (12) avec une paroi latérale de la canette, la surface de couvercle (12) présentant au moins une ouverture de déversement (14) à travers laquelle une substance se trouvant dans la canette peut être déversée ;
un élément d'actionnement (16), qui est disposé sur une face supérieure de la surface de couvercle (12), laquelle est opposée à un espace intérieur de la canette lorsque le couvercle de la canette y est fixé ; et
un élément de fermeture (18), qui est disposé sur une face inférieure de la surface de couvercle (12), laquelle est tournée vers un espace intérieur de la canette lorsque le couvercle de la canette y est fixé, l'élément de fermeture (18) pouvant être déplacé entre une position fermée, dans laquelle l'élément de fermeture (18) ferme l'ouverture de déversement (14) de manière étanche aux fluides et/ou aux gaz, et une position ouverte, dans laquelle l'ouverture de déversement (14) est au moins partiellement ouverte ;
l'élément de fermeture (18) et l'élément d'actionnement étant fixés l'un à l'autre au moyen d'une liaison, de préférence une liaison par soudage, la liaison se déplaçant lors du déplacement de l'élément de fermeture (18) de la position fermée à la position ouverte, de préférence le long d'une fente de guidage dans la surface de couvercle,
dans lequel l'élément d'actionnement (16) comprend une section de fixation (22), qui présente la liaison avec l'élément de fermeture (18), une section d'arrêt (28), au moyen de laquelle l'élément d'actionnement (16) est arrêté dans la position fermée sur la surface de couvercle (12) au moins avant un premier déplacement de la position fermée à la position ouverte, et une section de préhension (20), qui est conçue pour être saisie en vue du déplacement entre la position ouverte et la position fermée,
la section de fixation (22) étant reliée à la section de préhension (20) au moyen d'une première articulation (24) qui présente un premier axe d'articulation, et
la section d'arrêt (28) étant reliée à la section de préhension (20) au moyen d'une deuxième articulation (70) qui présente un deuxième axe d'articulation,
**caractérisé en ce que** l'élément de fermeture (18) peut être déplacé entre la position fermée et la position ouverte, guidé essentiellement en translation le long de la surface de couvercle (12), au moyen de l'élément d'actionnement (16), et **en ce que** le deuxième axe d'articulation est disposé entre le premier axe d'articulation et la section d'arrêt (28).

2. Couvercle de canette (10) selon la revendication 1,
dans lequel l'élément de fermeture (18) et/ou l'élément d'actionnement (16) sont chacun formés d'une matière plastique, en particulier constitués d'une matière plastique ;
et/ou
la première articulation (24) et/ou la deuxième articulation (70) étant réalisées sous forme de charnière à film ;
et/ou
la première articulation (24) étant formée par une encoche qui s'étend depuis une surface supérieure de l'élément d'actionnement (16) vers le bas dans l'élément d'actionnement, et la deuxième articulation (70) étant formée par une encoche qui s'étend depuis une surface inférieure de l'élément d'actionnement (16) vers le haut dans l'élément d'actionnement (16).

3. Couvercle de canette (10) selon l'une quelconque des revendications précédentes,
dans lequel la section de préhension (20) peut pivoter vers le haut par rapport à la section de fixation (22) le long du premier axe d'articulation, et dans lequel la section d'arrêt (28) peut pivoter vers le bas par rapport à la section de préhension (20) le long du deuxième axe d'articulation ;
et/ou
le premier axe d'articulation et/ou le deuxième axe d'articulation s'étendant transversalement, de préférence orthogonalement, à un axe longitudinal de la fente de guidage (34), le premier axe d'articulation et le deuxième axe d'articulation s'étendant parallèlement l'un à l'autre, et le premier axe d'articulation et le deuxième axe d'articulation étant espacés l'un de l'autre.

4. Couvercle de canette (10) selon l'une quelconque des revendications précédentes,
dans lequel la section de préhension (20) est reliée à la section d'arrêt (28) au moyen d'au moins un élément d'âme (72), en particulier à une extrémité de la section d'arrêt (28) opposée à la deuxième articulation (70), l'élément d'âme (72) étant conçu pour se rompre lors d'un pivotement relatif de la section de préhension (20) par rapport à la section d'arrêt (28), en particulier lors d'un premier pivotement de la section de préhension (20) de sa position de rangement à sa position d'actionnement ;
et/ou
la première articulation (24) s'étendant sur toute la largeur de la section de préhension (20) et/ou de la section de fixation (22), et la deuxième articulation (70) s'étendant seulement sur une partie de la largeur de la section de préhension (20), en particulier seulement sur une partie centrale de la section de préhension (20).

5. Couvercle de canette (10) selon l'une quelconque des revendications précédentes,
dans lequel la section de fixation (22) présente sur sa face inférieure une saillie qui est reliée à une partie de l'élément de fermeture, la saillie étant au moins partiellement disposée dans la fente de guidage (34) de la surface de couvercle (12) ;
et/ou
l'élément de fermeture (18) présentant sur sa face supérieure une saillie (90) qui est reliée à une partie de la section de fixation (22), la saillie (90) étant disposée au moins partiellement dans la fente de guidage (34) de la surface de couvercle (12) ;
et/ou
la liaison de l'élément de fermeture (18) avec l'élément d'actionnement (16) s'appuyant au moins partiellement, pour le guidage lors du déplacement de l'élément de fermeture (18) de la position fermée à la position ouverte, sur un bord de la surface de couvercle (12) délimitant au moins partiellement la fente de guidage (34) ;
et/ou
l'élément d'actionnement (16) étant relié à l'élément de fermeture (18) au moyen d'une soudure par ultrasons ou par friction en un seul point.

6. Couvercle de canette (10) selon l'une des revendications précédentes,
dans lequel au moins une surface plane est formée sur la liaison dans une zone qui s'étend à travers la fente de guidage (34), ladite au moins une surface plane étant tournée vers un bord de la surface de couvercle (12) qui délimite la fente de guidage (34) ;
et/ou
la surface de couvercle (12) et/ou l'élément de fermeture (18) présentant une encoche ou une empreinte dans une zone partielle qui est disposée à côté d'une zone partielle de l'ouverture de déversement qui est ouverte en premier lors du déplacement de l'élément de fermeture de la position fermée à la position ouverte, ou qui délimite cette zone partielle.

7. Couvercle de canette (10) selon l'une des revendications précédentes,
dans lequel la surface de couvercle (12) présente en outre une ouverture de compensation de pression (42), la surface de section transversale de l'ouverture de compensation de pression (42) étant plus petite que la surface de section transversale de l'ouverture de déversement (14),
l'ouverture de compensation de pression (42) étant fermée de manière étanche aux fluides et/ou étanche aux gaz par l'élément de fermeture (18) dans la position fermée et étant ouverte au moins partiellement dans la position ouverte,
l'ouverture de compensation de pression (42) étant disposée de telle sorte qu'elle est ouverte avant l'ouverture de déversement (14) lors du déplacement de l'élément de fermeture (18) de la position fermée à la position ouverte.

8. Couvercle de canette (10) selon l'une des revendications précédentes,
dans lequel, dans la position ouverte, un canal d'air est formé entre l'élément de fermeture (18) et la surface de couvercle (12), dont la première extrémité débouche sur la face supérieure de la surface de couvercle (12) et/ou sur une zone d'extrémité de l'ouverture de déversement (14) opposée au bord extérieur de la surface de couvercle, et dont la deuxième extrémité débouche sur une face inférieure de la surface de couvercle (12) sur une zone d'extrémité de l'élément de fermeture (18) opposée à l'ouverture de déversement (14) ;
le canal d'air étant bloqué dans la position fermée de l'élément de fermeture (18) entre la position ouverte et la position fermée et/ou étant rendu étanche par rapport à l'espace intérieur.

9. Couvercle de canette (10) selon la revendication précédente,
dans lequel au moins une zone partielle du canal d'air est formée par un renfoncement (48) dans l'élément de fermeture (18) et/ou dans la surface de couvercle (12) ;
de préférence, la première extrémité du canal d'air étant formée, dans la position ouverte, par un écart entre l'élément de fermeture (18) et l'élément d'actionnement (16) et/ou entre le joint d'étanchéité (44) et l'élément d'actionnement (16), de préférence formée par un évidement marginal dans une face inférieure de l'élément d'actionnement (16), une zone partielle de la surface de couvercle (12) étant de préférence disposée dans l'écart dans la position fermée et bloquant ainsi le flux d'air.

10. Couvercle de canette (10) selon la revendication précédente,
dans lequel la deuxième extrémité du canal d'air est formée, dans la position ouverte, par un écart entre l'élément de fermeture (18) et la surface de couvercle (12) et/ou entre le joint d'étanchéité (44) et la surface de couvercle (12) ;
la deuxième extrémité du canal d'air étant formée, dans la position ouverte, par le fait que
- la surface de couvercle (12) présente un ou plusieurs gaufrages ou renflements (50) faisant saillie en direction de la face supérieure, les gaufrages ou renflements (50) formant, dans la position ouverte de l'élément de fermeture (18), une voie de circulation pour l'air autour de l'élément de fermeture (18), ce qui supprime l'effet d'étanchéité de l'élément de fermeture (18) avec la face inférieure de la surface de couvercle (12) dans la zone de l'un ou des plusieurs gaufrages (50), et/ou
- la surface de couvercle (12) présente un ou plusieurs gaufrages faisant saillie en direction de la face inférieure, qui dévient l'élément de fermeture (18) vers le bas au moins par sections dans la position ouverte, ce qui supprime l'effet d'étanchéité de l'élément de fermeture (18) avec la face inférieure de la surface de couvercle (12) dans la zone déviée, et/ou
- l'élément de fermeture (18) est dévié vers le bas en position ouverte au niveau d'une moulure radialement extérieure (13) de la surface de couvercle (12), ce qui supprime l'effet d'étanchéité de l'élément de fermeture (18) avec la face inférieure de la surface de couvercle (12) dans la zone déviée.

11. Couvercle de canette (10) selon l'une des revendications précédentes,
dans lequel la fente de guidage (34) et l'ouverture de déversement (14) forment une ouverture de passage commune dans la surface de couvercle (12), et dans lequel la fente de guidage (34) est de forme allongée, une direction longitudinale de la fente de guidage (34) correspondant à une direction de déplacement de l'élément de fermeture (18) ;
et/ou
l'élément d'actionnement (16) présentant sur la face inférieure une zone centrale et une zone extérieure, la zone centrale étant en retrait par rapport à la zone extérieure, l'élément de fermeture (18) s'appuyant sur la face supérieure de la surface de couvercle (12) par l'intermédiaire de la zone extérieure, ce qui fait qu'une face supérieure de l'élément de fermeture (18) et/ou une face supérieure du joint d'étanchéité (44) est pressée contre la face inférieure de la surface de couvercle (12) ; et/ou
la fente de guidage (34) présentant au moins une encoche de décharge (38) à son extrémité opposée à l'ouverture de déversement (14).

12. Couvercle de canette (10) selon l'une des revendications précédentes,
dans lequel la section d'arrêt (28) comprend un élément d'arrêt (32) faisant saillie vers le bas depuis la face inférieure de l'élément d'actionnement (16) ;
l'élément d'arrêt (32) étant conçu comme un crochet ;
l'élément d'arrêt (32) étant disposé dans la fente de guidage (34) avant un premier déplacement de la position fermée à la position ouverte, de préférence dans une zone de l'extrémité de la fente de guidage (34) opposée à l'ouverture de déversement (14), et s'y engageant avec la surface de couvercle (12).

13. Couvercle de canette (10) selon la revendication précédente,
l'élément d'arrêt (32) étant disposé dans un renfoncement (45, 48) de l'élément de fermeture avant un premier déplacement de l'élément d'actionnement (16) de la position fermée à la position ouverte ;
et/ou
la section de préhension (20), en particulier dans sa position de rangement, encadrant au moins partiellement la section d'arrêt (28) ;
et/ou
la section de fixation (22) et la section d'arrêt (28) et la section de préhension (20) étant formées d'une seule pièce.

14. Couvercle de canette (10) selon l'une quelconque des revendications précédentes,
dans lequel l'élément de fermeture (18) comprend au moins une partie de support (49, 49A, 49B) ;
la portion de support (49, 49A, 49B) étant en appui contre la face inférieure de la surface de couvercle (12) dans au moins une zone correspondant à la position de la première articulation (24) et/ou de la deuxième articulation (70), la partie de support (49, 49A, 49B) étant réalisée dans un matériau plus dur que le joint d'étanchéité (44).

15. Canette, de préférence conçue comme une canette de boisson et/ou comme un récipient de stockage pour des produits en vrac, présentant au moins un couvercle de canette (10) selon l'une des revendications précédentes.
